# EUROPEAN PATENT APPLICATION

(11) **EP 4 836 564 A1**
(43) Date of publication of application: **04.11.2026**
(21) Application number: 24911017.2
(22) Date of filing: 23.12.2024
(51) Int. Cl.: H04W 72/1263

(54) **INFORMATION CONFIGURATION AND PROCESSING METHOD, TERMINAL, AND NETWORK SIDE DEVICE**

(30) Priority: 29.12.2023 CN 202311874272
(71) Applicant: Vivo Mobile Communication Co., Ltd., Dongguan, Guangdong 523863 (CN)
(72) Inventor: LIU, Siqi, Dongguan, Guangdong 523863 (CN); LIN, Zhipeng, Dongguan, Guangdong 523863 (CN); JI, Zichao, Dongguan, Guangdong 523863 (CN)
(74) Representative: dompatent
(86) International application number: PCT/CN2024/141384
(87) International publication number: WO 2025/140089

(57) **Abstract**

The present application relates to the technical field of communications, and discloses an information configuration and processing method, a terminal, and a network side device. The information configuration and processing method in embodiments of the present application comprises : a terminal acquires configuration information, wherein the configuration information includes at least one of the following : first information of an access resource or access resource group corresponding to at least one reference object or reference object group, second information of a reference object or reference object group corresponding to at least one access resource or access resource group, a first reference object or reference object group, a second reference object or reference object group, a first access resource or access resource group, and a second access resource or access resource group; and the terminal transmits at least one of the reference object and the access resource on the basis of the configuration information.

## Description

### CROSS-REFERENCE TO RELATED APPLICATIONS

This application claims priority to the Chinese Patent Application No. 202311874272.X, filed with the China National Intellectual Property Administration on December 29, 2023 and entitled "INFORMATION CONFIGURATION AND PROCESSING METHOD, TERMINAL, AND NETWORK-SIDE DEVICE", which is incorporated herein by reference in its entirety.

### TECHNICAL FIELD

This application pertains to the field of communication technologies, and specifically relates to an information configuration and processing method, a terminal, and a network-side device.

### BACKGROUND

In a 5th generation mobile communication technology (5th Generation Mobile Communication Technology, 5G) network, synchronization signal/physical broadcast channel block (Synchronization Signal/PBCH block, SSB) configuration is configured through a system message.

Currently, the system message-based configuration method makes configuration information such as SSB period and power consistent for each SSB index (index), and SSB configuration can be changed only by updating system messages. This results in poor flexibility in resource allocation and low utilization of resource allocation.

### SUMMARY

Embodiments of this application provide an information configuration and processing method, a terminal, and a network-side device, so as to solve the problems of poor flexibility in resource allocation and low utilization of resource allocation in the related art.

According to a first aspect, an information configuration and processing method is provided, executed by a terminal, where the method includes:
obtaining, by the terminal, configuration information; where the configuration information includes at least one of the following: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group; and
performing, by the terminal, transmission or reception of at least one of a reference object or an access resource based on the configuration information.

According to a second aspect, an information configuration and processing method is provided, executed by a network-side device, where the method includes:
sending, by the network-side device, configuration information; where
the configuration information assists a terminal in performing transmission or reception of at least one of a reference object or an access resource, and the configuration information includes at least one of the following: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group.

According to a third aspect, an information configuration and processing apparatus is provided, including:
an obtaining module configured to obtain configuration information; where the configuration information includes at least one of the following: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group; and
a transmission module configured to perform transmission or reception of at least one of a reference object or an access resource based on the configuration information.

According to a fourth aspect, an information configuration and processing apparatus is provided, including:
a sending module configured to send configuration information; where
the configuration information assists a terminal in performing transmission or reception of at least one of a reference object or an access resource, and the configuration information includes at least one of the following: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group.

According to a fifth aspect, a terminal is provided. The terminal includes a processor and a memory, where the memory stores a program or instructions capable of running on the processor, and the program or instructions, when executed by the processor, implement the steps of the method according to the first aspect.

According to a sixth aspect, a terminal is provided, including a processor and a communication interface, where the communication interface is configured to:
obtain configuration information; where the configuration information includes at least one of the following: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group; and
perform transmission or reception of at least one of a reference object or an access resource based on the configuration information.

According to a seventh aspect, a network-side device is provided. The network-side device includes a processor and a memory, where the memory stores a program or instructions capable of running on the processor, and the program or instructions, when executed by the processor, implement the steps of the method according to the second aspect.

According to an eighth aspect, a network-side device is provided, including a processor and a communication interface, where the communication interface is configured to: send configuration information; where
the configuration information assists a terminal in performing transmission or reception of at least one of a reference object or an access resource, and the configuration information includes at least one of the following: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group.

According to a ninth aspect, a readable storage medium is provided, where a program or instructions are stored on the readable storage medium, and the program or instructions, when executed by a processor, implement the steps of the method according to the first aspect, or implement the steps of the method according to the second aspect.

According to a tenth aspect, a wireless communication system is provided, including: a terminal and a network-side device, where the terminal may be configured to perform the steps of the method according to the first aspect, and the network-side device may be configured to perform the steps of the method according to the second aspect.

According to an eleventh aspect, a chip is provided. The chip includes a processor and a communication interface, where the communication interface is coupled to the processor, and the processor is configured to run a program or instructions to implement the method according to the first aspect, or to implement the method according to the second aspect.

According to a twelfth aspect, a computer program/program product is provided, where the computer program/program product is stored in a storage medium, and the program/program product is executed by at least one processor to implement the steps of the information configuration and processing method according to the first aspect, or to implement the steps of the information configuration and processing method according to the second aspect.

In the embodiments of this application, the terminal obtains configuration information, and performs transmission or reception of at least one of a reference object or an access resource based on the configuration information, where at least one of the following may be flexibly configured in the configuration information: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group. In the related art, configuration information, such as periods and powers of SSBs, configured through system messages is consistent, and the SSB configurations can be changed only by updating the system messages. By contrast, in the embodiments of this application, the terminal can more flexibly implement transmission or reception of at least one of a reference object or an access resource based on the flexibly configurable configuration information, improving the flexibility and utilization of resource allocation.

### BRIEF DESCRIPTION OF DRAWINGS

FIG. 1 is a schematic diagram of a wireless communication system to which embodiments of this application are applicable;
FIG. 2 is a schematic diagram of a structure of an SSB in the related art;
FIG. 3 is a first schematic diagram of SSBs and ROs in time domain and frequency domain in the related art;
FIG. 4 is a schematic diagram of SSB to RO mappings in frequency domain in the related art;
FIG. 5 is a second schematic diagram of SSBs and ROs in time domain and frequency domain in the related art;
FIG. 6 is a first schematic flowchart of an information configuration and processing method according to an embodiment of this application;
FIG. 7 is a second schematic flowchart of an information configuration and processing method according to an embodiment of this application;
FIG. 8 is a signaling interaction diagram of an information configuration and processing method according to an embodiment of this application;
FIG. 9 is a first schematic diagram for determining whether an RO is valid or invalid in an information configuration and processing method according to an embodiment of this application;
FIG. 10 is a second schematic diagram for determining whether an RO is valid or invalid in an information configuration and processing method according to an embodiment of this application;
FIG. 11 is a third schematic diagram for determining whether an RO is valid or invalid in an information configuration and processing method according to an embodiment of this application;
FIG. 12 is a first schematic structural diagram of an information configuration and processing apparatus according to an embodiment of this application;
FIG. 13 is a second schematic structural diagram of an information configuration and processing apparatus according to an embodiment of this application;
FIG. 14 is a schematic structural diagram of a communication device according to an embodiment of this application;
FIG. 15 is a schematic diagram of a hardware structure of a terminal according to an embodiment of this application; and
FIG. 16 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, objects distinguished by "first" and "second" are generally of a same type, and the quantities of the objects are not limited, for example, there may be one or more first objects. In addition, "or" in this application represents at least one of connected objects. For example, "A or B" covers three schemes, that is, scheme 1: including A and not including B; scheme 2: including B and not including A; and scheme 3: including both A and B. The character "/" generally indicates that the associated objects have an "or" relationship.

The term "indication" in this application may be a direct indication (or explicit indication) or an indirect indication (or implicit indication). A direct indication may be understood as a sender explicitly informing a receiver of content such as specific information, an operation to be performed, or a request result in a sent indication; an indirect indication may be understood as a receiver determining corresponding information based on an indication sent by a sender, or making a judgment and determining an operation to be performed, a request result, or the like based on a judgment result.

It should be noted that technologies described in the embodiments of this application are not limited to a long term evolution (Long Term Evolution, LTE)/LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for illustration purpose, and NR terms are used in most of the following descriptions, although these technologies may also be applied to other systems than an NR system, for example, a 6^{th} generation (6^{th} Generation, 6G) communication system.

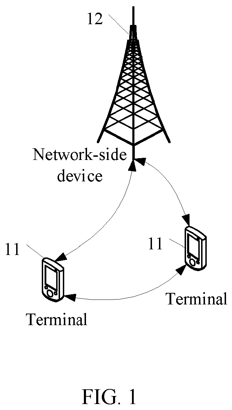

FIG. 1 is a schematic diagram of a wireless communication system to which embodiments of this application are applicable. As shown in FIG. 1, the wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) or virtual reality (Virtual Reality, VR) device, a robot, a wearable device (Wearable Device), a flight vehicle (flight vehicle), vehicle user equipment (Vehicle User Equipment, VUE), ship-borne equipment, pedestrian user equipment (Pedestrian User Equipment, PUE), smart household (home devices with wireless communication functions, such as refrigerators, televisions, washing machines, or furniture), a game console, a personal computer (Personal Computer, PC), a teller machine, or a self-service machine. The wearable device includes a smartwatch, a smart band, smart earphones, smart glasses, smart jewelry (a smart bangle, a smart bracelet, a smart ring, a smart necklace, a smart leglet, a smart anklet, and the like), a smart wristband, smart clothing, or the like. The vehicle user equipment may also be referred to as an in-vehicle terminal, an in-vehicle controller, an in-vehicle module, an in-vehicle component, an in-vehicle chip, an in-vehicle unit, and the like. It should be noted that the terminal 11 is not limited to a specific type in the embodiments of this application. The network-side device 12 may include an access network device or a core network device. The access network device may also be referred to as a radio access network (Radio Access Network, RAN) device, a wireless access network function, or a wireless access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (Node B, NB), an evolved NodeB (Evolved Node B, eNB), a next generation NodeB (the next generation Node B, gNB), a new radio NodeB (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home Node B, HNB), a home evolved NodeB (home evolved Node B), a transmission reception point (Transmission Reception Point, TRP), or other suitable terms in the field. Provided that the same technical effect is achieved, the base station is not limited to specific technical terms. It should be noted that in the embodiments of this application, only the base station in the NR system is used as an example for description, but a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function unit (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in the embodiments of this application, only the core network device in the NR system is used as an example for description, but a specific type of the core network device is not limited.

For better understanding of the technical solutions provided in the embodiments of this application, the following first describes some related background knowledge.

### I. Synchronization signal and physical broadcast channel (Physical Broadcast Channel, PBCH)

For user equipment (User Equipment, UE) to search for a suitable cell and synchronize with the selected cell, a network usually needs to broadcast a synchronization signal and provide specific main information about the cell. The synchronization signal mainly includes a primary synchronization signal and a secondary synchronization signal. A PBCH carries the most important system information, also referred to as a master information block (Master Information Block, MIB).

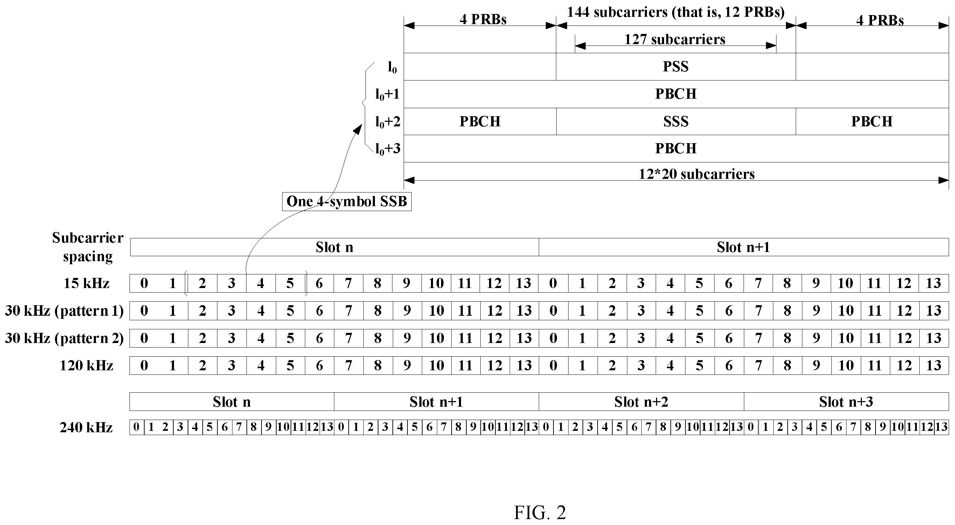

FIG. 2 is a schematic structural diagram of an SSB in the related art. In 5G, a structure of the SSB is as shown in FIG. 2.

### II. Rules for mapping from SSB to random access channel occasion (RACH Occasion, RO) in 5G NR

Physical random access channel (Physical Random Access Channel, PRACH) resources and SSB-RO configuration parameters are configured in system information block (System Information Block, SIB) 1. In NR, for a cell, multiple frequency division multiplexed (Frequency Division Multiplex, FDM) PRACH transmission occasions (that is, ROs) may be configured at one time-domain position for transmitting PRACH. At one time point, the number of ROs allowed for FDM may be: {1,2,4,8}, which is configured and determined by a higher layer parameter Msg1-FDM.

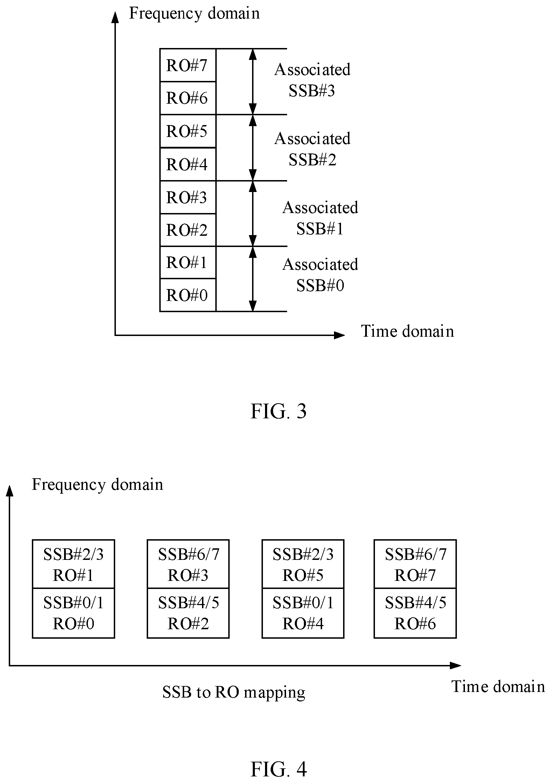

A random access preamble (Preamble) can be transmitted only on a time-domain resource configured by using a physical random access channel configuration index (PRACHConfigurationIndex) parameter and a frequency-domain resource configured by using the Msg1-FDM parameter. The PRACH frequency-domain resources *n_{RA}* ∈ {0,1, ... , *M* - 1} , where M equals the value of the higher layer parameter Msg1-FDM. During initial access, the PRACH frequency-domain resources *n_{RA}* are numbered in ascending order, starting from the lowest frequency RO resource in an initial active uplink bandwidth part (initial active uplink bandwidth part); otherwise, the PRACH frequency-domain resources *n_{RA}* are numbered in ascending order, starting from the lowest frequency RO resource in an active uplink bandwidth part (active uplink bandwidth part). FIG. 3 is a first schematic diagram of SSBs and ROs in time domain and frequency domain in the related art. For example, in FIG. 3, the number of FDMed ROs at one time point is 8 (Msg1-FDM=8), and the RO resources are numbered RO#0 to RO#7 in ascending order of frequency.

In NR, there is an association between ROs and actually transmitted SSBs. The ROs are associated with the SSBs in a frequency-first (from low frequency to high frequency), time-second manner. One SSB may be associated with multiple consecutive ROs, or multiple SSBs may be associated with one RO (in this case, different SSBs correspond to different preambles), which is configured by the network through a parameter ssb-perRACH-OccasionAndCB-PreamblesPerSSB. For example, oneEighth means that one SSB is associated with 8 consecutive ROs; eight means that 8 SSBs are associated with one RO; and {n4, n8, n12, ...} means the number of preambles associated with each SSB on one RO. For example, n4 means that the number of preambles associated with each SSB on one RO is 4, and n8 means that the number of preambles associated with each SSB on one RO is 8.

After all SSBs have been associated with one round of ROs, one SSB-RO mapping cycle (SSB-RO mapping cycle) is formed. One SSB to RO association period (association period) may include one or more SSB-RO mapping cycles. One SSB to RO association pattern period (association pattern period) may include one or more SSB-RO association periods, and the SSB to RO mapping repeats based on the association pattern period, with a maximum association pattern period being 160 ms.

Typically, a base station may use different beams to transmit different SSBs, where the number of SSBs is configured through an ssb-PositionsInBurst parameter. For frequency range (Frequency Range, FR) 2, the maximum number of SSBs is 64. A UE selects, based on the received downlink beam/SSB strength, an RO/"RO and preamble combination" associated with an SSB having good signal quality, for sending Msg1. In this way, based on the RO for the received preamble/"RO and Preamble combination", the network can determine an SSB selected by the UE, and sends Msg2 on a downlink beam corresponding to the SSB, thereby ensuring the reception quality of downlink signals.

Taking FIG. 3 as an example, the number of FDMed ROs at one time point is 8, the number of actually transmitted SSBs is 4, including SSB#0, SSB#1, SSB#2, and SSB#3, with each SSB being associated with two ROs. If the UE determines to send PRACH/Msg1 on an RO corresponding to SSB#0, the UE selects one RO from RO#0 and RO#1 to send the PRACH.

FIG. 4 is a schematic diagram of SSB to RO mappings in frequency domain in the related art. Taking FIG. 4 as an example, the number of FDMed ROs at one time point is 2, the number of actually transmitted SSBs is 8, including SSB#0, SSB#1, ..., and SSB#7, with every two SSBs being associated with one RO. When multiple SSBs share one RO, the preamble sets associated with the multiple SSBs are different, meaning that one preamble cannot belong to preamble sets associated with different SSBs at the same time. Taking RO#0 in FIG. 4 as an example, RO#0 has a total of 60 preambles, where the preambles with indexes (index) 0 to 29 are associated with SSB#0, and the preambles with indexes 30 to 59 are associated with SSB#1.

It should be noted that each square in FIG. 4 represents an RO, not an SSB, and the SSB marked in each square indicates which SSB(s) the RO is associated with.

Before sending a PRACH, the UE first selects an SSB with an RSRP higher than a threshold based on the reference signal received power (Reference Signal Received Power, RSRP) of the received beam (SSB). If there are multiple SSBs having an RSRP higher than the threshold, the UE may select any one SSB having an RSRP higher than the threshold; and if there is no SSB having an RSRP higher than the threshold, the UE selects one SSB based on implementation.

Based on network (Network, NW) configuration, the UE obtains a correspondence between SSBs and ROs. After selecting the SSB, the RO corresponding to the selected SSB is used as the RO for sending PRACH/Preamble/Msg1. If the selected SSB is associated with multiple ROs, the terminal can select one of the ROs to send PRACH/Preamble/Msg1.

In the example shown in FIG. 3, assuming that the UE has selected SSB#1, the UE may select one from RO#2 and RO#3 to send PRACH/Msg1. In the example shown in FIG. 4, if the UE has selected SSB#1, the UE may select, from the ROs (RO#0 or 4) associated with SSB#1, an available RO closest to the current time to send PRACH/Msg1. In the selected RO, the UE selects from, the preamble set associated with the selected SSB, one preamble to send PRACH. As shown in FIG. 4, one RO is associated with two SSBs, so in the available preamble set associated with the SSBs in one RO, the preambles are classified into two subsets, with each subset corresponding to one SSB. The UE selects a preamble sequence from the preamble subset corresponding to the selected SSB for sending PRACH/Msg1.

### III. Determining of RO set for PRACH repetition

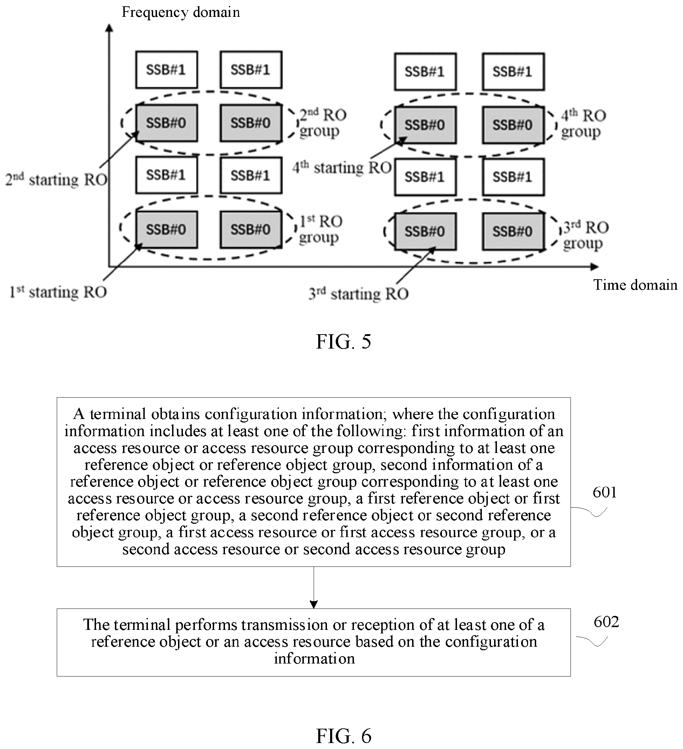

In Rel-18, PRACH repetition is introduced to enhance uplink coverage. For PRACH repetition, a UE needs to repeatedly send a preamble on multiple ROs located at different time-domain positions but associated with a same SSB, where the number of repetitions may be {2,4,8}. After the UE determines the number of PRACH repetitions, it needs to determine an RO set, where the number of valid ROs in the RO set equals the number of PRACH repetitions. Assuming that the number of PRACH repetitions is N1, the rule for determining an RO group (group) is: first determining a starting RO (starting RO) of an RO group, and then determining the remaining N1-1 ROs of the RO group. The remaining N1-1 ROs of each RO group are ROs that are associated with a same SSB as the starting RO, located at the same frequency position, and have the same associated preamble set. For example, FIG. 5 is a second schematic diagram of SSBs and ROs in time domain and frequency domain in the related art. In FIG. 5, assuming that the number of PRACH repetitions is 2, for SSB#0, the four RO groups marked by the shaded parts in the figure are the determined RO groups.

The following describes in detail an information configuration and processing method, a terminal, and a network-side device according to the embodiments of this application with reference to the accompanying drawings through some embodiments and application scenarios thereof.

The information configuration and processing method according to an embodiment of this application may be applied to a terminal. The terminal can flexibly perform transmission or reception of at least one of a reference object or an access resource based on flexibly configurable configuration information.

FIG. 6 is a first schematic flowchart of an information configuration and processing method according to an embodiment of this application. As shown in FIG. 6, the method includes step 601 and step 602.

Step 601: A terminal obtains configuration information; where the configuration information includes at least one of the following: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group.

Step 602: The terminal performs transmission or reception of at least one of a reference object or an access resource based on the configuration information.

It should be noted that the embodiments of this application may be applied to scenarios for operations related to information configuration and processing, the terminal includes but is not limited to the types of the terminal 11 listed above, and the network-side device includes but is not limited to the types of the network-side device 12 listed above, which are not limited in the embodiments of this application.

In the related art, in a 5G network, SSB configuration is configured through a system message, and SSB resource configuration can be changed only through radio resource control (Radio Resource Control, RRC) reconfiguration. In addition, all SSB indexes share the same SSB period and power. If one SSB index is not sent in a specific period, it remains non-transmittable in other periods. Only a system message update can change a sending status of an SSB index.

It should be noted that for different SSB indexes or SSB index groups, system loads (load) are not necessarily the same, the corresponding RO configurations are not necessarily the same, and the ratios of the corresponding SSB to RO mappings (mapping) are not necessarily the same. From another perspective, for different RO resource groups, the corresponding SSB resource configurations are not necessarily the same.

In view of the above issues, the embodiment of this application provides an information configuration and processing method, to flexibly configure related information of at least one of a reference object or an access resource. A terminal can more flexibly perform transmission or reception of at least one of a reference object or an access resource based on this configuration, where the transmission may be understood as sending or receiving.

Optionally, the reference object may include at least one of the following:
<1> a synchronization signal;
<2> a broadcast channel;
<3> an SSB;
<4> a channel state information reference signal (Channel State Information Reference Signal, CSI-RS); or
<5> a physical uplink shared channel (Physical Uplink Shared Channel, PUSCH).

Optionally, the access resource may include at least one of the following:
<1> a PUSCH;
<2> a PUSCH transmission occasion (Occasion);
<3> a MIB;
<4> an RO;
<5> a paging occasion (paging occasion, PO);
<6> a paging frame (paging frame, PF);
<7> a carrier (carrier); or
<8> a search space.

The following uses the reference object being an SSB and the access resource being an RO as an example for description, but this application is not limited thereto.

Specifically, the terminal may first obtain configuration information, for example, obtain the configuration information from the network-side device. The configuration information includes at least one of the following:
a. First information of an access resource or access resource group corresponding to at least one reference object or reference object group.

Specifically, for example, corresponding RO/RO group-related first information is separately configured for each, one, some, or all SSBs/SSB groups.

Optionally, the first information may include at least one of the following:
(1) Attribute information of the access resource or access resource group.
   Specifically, for example, whether the RO/RO groups are continuous in time-frequency domain, such as continuous RO/RO groups or discrete RO/RO groups.
(2) A type of the access resource or access resource group.
(3) A time-domain position of the access resource or access resource group.
(4) A frequency-domain position of the access resource or access resource group.
(5) A period of a PRACH.
(6) A period of the access resource or access resource group.
(7) A group size of the access resource group.
   Specifically, for example, the number of ROs corresponding to an RO group in at least one of time domain and frequency domain.
(8) The number of access resources corresponding to the access resource group in time domain.
(9) The number of access resources corresponding to the access resource group in frequency domain.
(10) A PRACH time window (PRACH time window).
(11) A type of a PRACH sequence.
(12) A length of a PRACH sequence.
(13) A format of a PRACH.
   Specifically, for example, a long PRACH format (long PRACH format) is configured for an SSB corresponding to a wide beam for covering 100 km in a cell; and a short PRACH format (short PRACH format) is configured for an SSB corresponding to a narrow beam for covering 300 m.
(14) A cyclic prefix (Cyclic Prefix, CP) length (CP length).
(15) The number of repetitions (Repetition).
(16) The number of mappings or the minimum number of mappings between the reference object or reference object group and the access resource or access resource group.

Specifically, the number or minimum number N of mappings between an SSB/SSB group and a corresponding RO/RO group for determining an SSB-RO mapping cycle, association period, or time cycle.

It should be noted that the mapping cycle, association period, and time cycle may be the same or different. Specifically:

In one embodiment, the mapping cycle may be interpreted as the time or cycle corresponding to or required for mapping between reference objects and access resources. The association period (association period) is the time or cycle corresponding to an integer number of mapping cycles (mapping cycle) for mapping reference objects to access resources. The association pattern period includes one or more association periods.

In some embodiments, N corresponding to different SSBs/SSB groups may vary. For example, SSB1 needs to be mapped at least once, and SSB2 needs to be mapped at least twice.

(17) A subcarrier spacing (Subcarrier Spacing, SCS).

(18) A time-domain interval between two access resources or access resource groups.

(19) A frequency-domain interval between two access resources or access resource groups.

Specifically, it may be at least one of the time-domain and frequency-domain intervals between two ROs/RO groups, for example, at least one of the time-domain and frequency-domain intervals between two adjacent ROs/RO groups.

(20) Configuration information of a first access resource, where the first access resource is an unavailable, invalid, or flexible access resource.

(21) Configuration information of a second access resource, where the second access resource is an unavailable, invalid, or flexible access resource within the access resource group.

Specifically, the configuration information may be a configuration of an actually unavailable, invalid, or flexible RO, or a configuration of an actually unavailable, invalid, or flexible RO within an RO group. Being flexible means that a resource may be overridden (override) by other signaling, or may be preempted or dropped.

Optionally, during mapping between SSBs/SSB groups and ROs/RO groups, no mapping is established with an actually unavailable, invalid, or flexible RO, or no mapping is established with an RO group containing an actually unavailable, invalid, or flexible RO.

(22) Configuration information of a third access resource, where the third access resource is an available, valid, or stable access resource.

(23) Configuration information of a fourth access resource, where the fourth access resource is an available, valid, or stable access resource within the access resource group.

Specifically, the configuration information may be a configuration of an actually available, valid, or stable RO, or a configuration of an actually available, valid, or stable RO within an RO group. Being stable means that a resource cannot or is not allowed to be overridden by other signaling, preempted, or dropped, for example, an RO configured on an uplink (Uplink, UL) carrier, UL bandwidth part (Bandwidth Part, BWP), UL subband (subband), or UL resource block (resource block, RB) set (set) under time division duplex (Time Division Duplex, TDD) deployment.

Optionally, during mapping between SSBs/SSB groups and ROs/RO groups, mapping is established with an actually transmitted RO, or mapping is established with an RO group containing an actually available, valid, or stable RO.

(24) Configuration information of a first access resource group, where the first access resource group is an unavailable, invalid, or flexible access resource group.

(25) Configuration information of a second access resource group, where the second access resource group is an available, valid, or stable access resource group.

b. Second information of a reference object or reference object group corresponding to at least one access resource or access resource group.

Specifically, for example, corresponding SSB/SSB group related second information is configured separately for each, one, some, or all ROs/RO groups.

Optionally, the second information may include at least one of the following:
(1) A type of the reference object or reference object group.
(2) A format of the reference object or reference object group.
   Specifically, for example, a long PRACH format is configured for a wide beam corresponding to an SSB for covering 100 km in a cell; and a short PRACH format is configured for a narrow beam corresponding to an SSB for covering 300 m.
(3) A time-domain position of the reference object or reference object group.
(4) A frequency-domain position of the reference object or reference object group.
(5) A period of the reference object or reference object group.
(6) A group size of the reference object group.
   Specifically, for example, the number of SSBs corresponding to an SSB group in at least one of time domain and frequency domain.
(7) The number of reference objects corresponding to the reference object group in time domain.
(8) The number of reference objects corresponding to the reference object group in frequency domain.
(9) A time window of the reference object or reference object group.
   Specifically, for example, a time window for an SSB/SSB group.
(10) A type of a sequence of the reference object or reference object group.
(11) A length of a sequence of the reference object or reference object group.
(12) A CP length.
(13) The number of repetitions.
(14) The number of mappings or the minimum number of mappings between the access resource or access resource group and the reference object or reference object group.

Specifically, the number or minimum number N' of mappings between an RO/RO group and a corresponding SSB/SSB group for determining an SSB-RO mapping cycle, association period, or time cycle.

In some embodiments, N' corresponding to different ROs/RO groups may vary.

(15) An SCS.

(16) A time-domain interval between two reference objects or reference object groups.

(17) A frequency-domain interval between two reference objects or reference object groups.

Specifically, it may be at least one of the time-domain and frequency-domain intervals between two SSBs/SSB groups, for example, at least one of the time-domain and frequency-domain intervals between two adjacent SSBs/SSB groups.

(18) Configuration information of a first reference object, where the first reference object is a transmitted reference object.

(19) Configuration information of a second reference object, where the second reference object is a reference object transmitted within the reference object group.

(20) Configuration information of a first reference object group, where the first reference object group is a transmitted reference object group.

Specifically, the configuration information may be a configuration of an actually transmitted SSB within an SSB group. Being actually transmitted may refer to being actually transmitted by the terminal.

Optionally, during mapping between SSBs/SSB groups and ROs/RO groups, mapping is established only with an actually transmitted SSB within an SSB group.

c. A first reference object or first reference object group.

d. A second reference object or second reference object group.

Specifically, the first reference object or first reference object group and the second reference object or second reference object group may be used to determine validity of the access resource or access resource group, for example, to determine validity of the RO/RO group.

e. A first access resource or first access resource group.

f. A second access resource or second access resource group.

Specifically, the first access resource or first access resource group and the second access resource or second access resource group may be used to determine validity of the reference object or reference object group, for example, to determine validity of the SSB/SSB group.

In the information configuration and processing method according to the embodiments of this application, the terminal obtains configuration information, and performs transmission or reception of at least one of a reference object or an access resource based on the configuration information, where at least one of the following may be flexibly configured in the configuration information: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group. In the related art, configuration information, such as periods and powers of SSBs, configured through system messages is consistent, and the SSB configurations can be changed only by updating the system messages. By contrast, in the embodiments of this application, the terminal can more flexibly implement transmission or reception of at least one of a reference object or an access resource based on the flexibly configurable configuration information, improving the flexibility and utilization of resource allocation.

Optionally, in the embodiments of this application, at least one of the following may be performed:
<1> Determining, by the terminal, validity of the access resource or access resource group.

For example, the terminal determines validity of an RO/RO group.

Specifically, the validity herein may be interpreted as: whether it is used for mapping, whether it exists, whether it is available/selectable, whether it is unavailable/not selectable, whether rate matching (rate matching)/puncturing needs to be performed based on it, whether the RO/RO group needs to be considered in determining resource conflicts, whether other uplink transmissions are allowed on a resource that overlaps with the RO/RO group in at least one of time domain and frequency domain, and whether other uplink transmissions are allowed on a resource having at least one of the time-domain and frequency-domain intervals from the RO/RO group being less than a preset value.

<2> Determining, by the terminal, validity of the reference object or reference object group.

For example, the terminal determines validity of an SSB/SSB group.

Specifically, the validity herein may be interpreted as: whether it is used for mapping, whether it exists/is actually transmitted/is received, whether it is available/selectable, whether it is unavailable/not selectable, whether rate matching/puncturing needs to be performed based on it, whether signals of other SCSs can be sent/received on a resource that overlaps with an SSB/SSB group in at least one of time domain and frequency domain, and whether signals of other SCSs can be sent/received on a resource having at least one of the time-domain and frequency-domain intervals from the RO/RO group being less than a preset value.

The following uses the reference object or reference object group being an SSB/SSB group and the access resource or access resource group being an RO/RO group as an example to describe how the terminal determines the validity of the access resource or access resource group.

Optionally, an implementation manner in which the terminal determines the validity of the access resource or access resource group may include:
determining, by the terminal, the access resource or access resource group as valid or invalid based on at least one of the following:
(a) a first reference object or first reference object group corresponding to the access resource or access resource group; or
(b) a second reference object or second reference object group corresponding to the access resource or access resource group.

Optionally, the first reference object or first reference object group may include at least one of the following:
i. A reference object or reference object group corresponding to same or related third information as the access resource or access resource group.

Specifically, the first SSB/SSB group may include an SSB/SSB group corresponding to a same or related type/use case/attribute/service/scenario as the RO/RO group.

For example, the first SSB/SSB group is used for a near-end UE, and the RO/RO group is mainly used for a near-end UE, meaning that a near-end SSB affects validity of a near-end RO.

For another example, the first SSB/SSB group is used for a far-end UE, and the RO/RO group is mainly used for a far-end UE, meaning that a far-end SSB affects validity of a far-end RO.

The attribute may be whether continuity exists in time/frequency domain. For example, SSBs in the first SSB/SSB group are continuous in at least one of time domain and frequency domain, and ROs in the RO/RO group are continuous in at least one of time domain and frequency domain. In this case, it is highly probable that both serve small cells, narrow beams, or near-end terminals. For another example, SSBs in the first SSB/SSB group are discontinuous in at least one of time domain and frequency domain, with the interval not less than a threshold 1, and ROs in the RO/RO group are discontinuous in at least one of time domain and frequency domain, with the interval not less than a threshold 2. In this case, it is highly probable that both serve macro cells, wide beams, or far-end terminals.

Optionally, the type/use case/attribute/service/scenario may be understood as at least one of the following:
<1> coverage: for example, a macro cell or a small cell;
<2> a base station type: for example, macro base station, micro base station, or pico base station;
<3> power or a power class of at least one of a terminal and a base station: for example, high power UE (high power UE), or power class (power class) 1/2/3;
<4> BWP/time-frequency resource block information: for example, different/specific BWPs/time-frequency resource blocks;
<5> duplex mode information: for example, different/specific duplex modes (full duplex vs half duplex);
<6> access mode or method information: for example, different/specific access modes;
<7> cell/transmission reception point (Transmission Reception Point, TRP) type information: for example, different/specific cell/TRP types (mtrp vs single trp, macro cell vs small cell);
<8> waveform information: for example, different/specific waveforms, specifically such as cyclic prefix orthogonal frequency division multiplexing (CP-OFDM), discrete Fourier transform spread orthogonal frequency division multiplexing (DFT-S-OFDM), or orthogonal time frequency space (Orthogonal Time Frequency Space, OTFS) waveform;
<9> service information: for example, different/specific RAN services, such as sensing services, non-terrestrial networks (Non-terrestrial networks, NTN), and LP-WUS (low power wake up signaling);
<10> energy-saving feature information: for example, different/specific network energy saving features, specifically such as related to SSB long and short periods, whether paging/SIB/RACH is enabled, or a paging/SIB/RACH period;
<11> period information: for example, different/specific SSB periods/measurement periods/periods of other related signals (periods of paging/SIB/RACH, or the like); or
<12> higher-layer feature information: for example, different/specific higher layer protocol features, specifically such as whether the higher layer protocol enables special services, such as data plane, non-public network (Non-Public Network, NPN), or a simplified protocol stack.

ii. A reference object or reference object group corresponding to different third information from the access resource or access resource group.

Specifically, the first SSB/SSB group may include an SSB/SSB group corresponding to a different type/use case/attribute/service/scenario from the RO/RO group.

For example, the first SSB/SSB group is used for a near-end UE, but the RO/RO group is mainly used for a far-end UE, or vice versa, meaning that a near-end SSB affects validity of a far-end RO.

iii. A reference object or reference object group corresponding to fourth information.

Specifically, it may be an SSB/SSB group corresponding to a specific type/use case/attribute/service/scenario. For example:

Type: may include at least one of a purpose, a corresponding terminal type, a corresponding network type, a corresponding synchronization signal type, a corresponding broadcast signal type, a corresponding bandwidth part BWP, a corresponding time-frequency resource block, a corresponding duplex mode, a corresponding access mode or method, a corresponding cell, a corresponding transmission reception point TRP, a corresponding waveform, a corresponding radio access network RAN service, a corresponding network energy-saving feature, a corresponding SSB period, a corresponding measurement period, a corresponding related signal period, and a corresponding higher layer protocol feature of the reference object or reference object group and/or the access resource or access resource group.

Attribute: may include at least one of BWP information, time-domain resource information, frequency-domain resource information, duplex mode information, access mode or method, cell type information, TRP type information, waveform information, RAN service information, energy-saving feature information, period information, higher layer feature information, transmission information, purpose information, terminal information, and network information.

The type may include but is not limited to at least one of the following:
a purpose, for example, for cell search, for assisting in determining timing advance (Timing Advance, TA), for validation (validation), for TA validation, for beam management (beam management, BM), measurement, a persistent object, an object requiring mandatory transmission (mandatory transmission may be interpreted as transmission that is inevitable or that needs to be considered), an object triggered on demand, or an object transmitted on demand; where it should be noted that transmission may be interpreted as sending or receiving;
a corresponding terminal type, such as reduced capability (Reduced Capability, RedCap) terminal, smartphone (smart phone), different types of IoT devices, different types of ambient internet of things (Ambient Internet of Things, A-IoT) devices, terminals with different power classes, or different cyclic prefix extensions (cyclic prefix extension, CPE);
a corresponding network type, such as terrestrial network (Terrestrial Network, TN), non-terrestrial network (Non Terrestrial Network, NTN), IoT network, or non-IoT network;
a corresponding synchronization signal type;
a corresponding broadcast signal type;
a corresponding bandwidth part (Band Width Part, BWP);
a corresponding time-frequency resource block;
a corresponding duplex mode, such as full duplex (full duplex) or half duplex (half duplex);
a corresponding access mode or access method;
a corresponding cell, such as a macro cell (macro cell) or a small cell (small cell);
a corresponding transmission reception point (Transmission Reception Point, TRP) type, such as multi-TRP (MTRP) or single TRP;
a corresponding waveform, such as a cyclic prefix-orthogonal frequency division multiplexing (Cyclic Prefix- Orthogonal Frequency Division Multiplexing, CP-OFDM) waveform, a discrete Fourier transform-spread-orthogonal frequency division multiplexing (Discrete Fourier Transform-Spread-Orthogonal Frequency Division Multiplexing, DFT-S-OFDM) waveform, or an orthogonal time and frequency space (orthogonal time and frequency space, OTFS) waveform;
a corresponding RAN service, such as a sensing (sensing) service, an NTN service, a low power synchronization signal (LP-SS) service, or a wake-up signal (Wake-up signal, WUS) service;
a corresponding network energy-saving feature, such as related to SSB long or short period, whether paging (paging), system information block (System Information Block, SIB), random access channel (Random Access Channel, RACH), or the like is enabled, or a paging/SIB/RACH period;
a corresponding SSB period;
a corresponding measurement period;
a corresponding period of other related signals, such as a period of paging, SIB, or RACH; or
a corresponding higher-layer protocol feature, such as whether the higher layer protocol enables special services, such as data plane, NPN, or a simplified protocol stack.

Attribute information includes but is not limited to at least one of the following:
BWP information, time-domain resource information (such as a time-domain resource block), frequency-domain resource information (such as a frequency-domain resource block), duplex mode information, access mode or method, cell type information, TRP type information, waveform information, RAN service information, energy-saving feature information, period information, higher layer feature information, transmission information, purpose information, terminal information, and network information.

For example, whether all correspond to a same BWP, whether all correspond to a long period, and whether all correspond to a short period.

Use case/service/scenario: may be interpreted as coverage enhancement, reliability improvement, NTN, TN, commercial service, public safety service, and the like.

iv. A first target reference object or first target reference object group.

Specifically, the first target reference object or first target reference object group may be an SSB/SSB group that needs to be considered in determining RO validity.

The third information and the fourth information each include at least one of a type, a use case, an attribute, a service, or a scenario.

Optionally, the second reference object or second reference object group may include at least one of the following:

i. A reference object or reference object group corresponding to different fifth information from the access resource or access resource group.

Specifically, the second SSB/SSB group may include an SSB/SSB group corresponding to a different type/use case/attribute/service/scenario from the RO/RO group;
for example, the second SSB/SSB group is used for a far-end UE, but the RO/RO group is mainly used for a near-end UE, meaning that a far-end SSB does not affect validity of a near-end RO, or a near-end SSB does not affect validity of a far-end RO.

ii. A reference object or reference object group corresponding to sixth information.

Specifically, it may be an SSB/SSB group corresponding to a specific type/use case/attribute/service/scenario.

iii. A second target reference object or second target reference object group.

Specifically, the second target reference object or second target reference object group may be an SSB/SSB group that does not need to be considered in determining RO validity.

The fifth information and the sixth information each include at least one of a type, a use case, an attribute, a service, or a scenario.

Optionally, the invalid access resource or access resource group satisfies at least one of the following, or the valid access resource or access resource group does not satisfy at least one of the following:
(1) At least one access resource within the access resource or access resource group follows the first reference object or first reference object group.
   Specifically, at least one RO within the RO/RO group follows the first SSB/SSB group.
(2) At least one access resource within the access resource or access resource group precedes the first reference object or first reference object group.
   Specifically, at least one RO within the RO/RO group precedes the first SSB/SSB group.
(3) An interval between at least one access resource within the access resource or access resource group and the first reference object or first reference object group is not greater than a first value.
   Specifically, an interval between at least one RO within the RO/RO group and the first SSB/SSB group is not greater than a first value, where the first value may be a preset value.
(4) At least one access resource within the access resource or access resource group overlaps with the first reference object or first reference object group.

Specifically, at least one RO within the RO/RO group overlaps with the first SSB/SSB group.

Optionally, the at least one access resource within the access resource or access resource group, and the first reference object or first reference object group belong to a same or different time units or time unit groups, for example, belonging to a same slot (slot).

Optionally, the valid access resource or access resource group satisfies at least one of the following, or the invalid access resource or access resource group does not satisfy at least one of the following:
(1) at least one access resource within the access resource or access resource group and the first reference object or first reference object group belong to different time units; or
(2) at least one access resource within the access resource or access resource group and the first reference object or first reference object group belong to different time unit groups.

Optionally, in a case that at least one access resource within the access resource or access resource group and the first reference object or first reference object group belong to a same time unit and do not satisfy at least one of the following, the access resource or access resource group is valid; or in a case that at least one access resource within the access resource or access resource group and the first reference object or first reference object group belong to a same time unit group and do not satisfy at least one of the following, the access resource or access resource group is valid;
or
in a case that at least one access resource within the access resource or access resource group and the first reference object or first reference object group belong to a same time unit and satisfy at least one of the following, the access resource or access resource group is invalid; or in a case that at least one access resource within the access resource or access resource group and the first reference object or first reference object group belong to a same time unit group and satisfy at least one of the following, the access resource or access resource group is invalid:
(1) the at least one access resource within the access resource or access resource group follows the first reference object or first reference object group;
(2) the at least one access resource within the access resource or access resource group precedes the first reference object or first reference object group;
(3) an interval between the at least one access resource within the access resource or access resource group and the first reference object or first reference object group is not greater than a second value; or
(4) the at least one access resource within the access resource or access resource group overlaps with the first reference object or first reference object group.

Optionally, the valid access resource or access resource group satisfies at least one of the following, or the invalid access resource or access resource group does not satisfy at least one of the following:
(1) At least one access resource within the access resource or access resource group follows the second reference object or second reference object group.
   Specifically, at least one RO within the RO/RO group follows the second SSB/SSB group.
(2) At least one access resource within the access resource or access resource group precedes the second reference object or second reference object group.
   Specifically, at least one RO within the RO/RO group precedes the second SSB/SSB group.
(3) An interval between at least one access resource within the access resource or access resource group and the second reference object or second reference object group is greater than or equal to a third value.
(4) An interval between at least one access resource within the access resource or access resource group and the second reference object or second reference object group is not greater than a fourth value.
   Specifically, an interval between at least one RO within the RO/RO group and the second SSB/SSB group is not greater than the fourth value, where the fourth value may be a preset value.
(5) At least one access resource within the access resource or access resource group overlaps with the second reference object or second reference object group.

Specifically, at least one RO within the RO/RO group overlaps with the second SSB/SSB group.

Optionally, the valid access resource or access resource group satisfies at least one of the following, or the invalid access resource or access resource group does not satisfy at least one of the following:
(1) at least one access resource within the access resource or access resource group and the second reference object or second reference object group belong to different time units; or
(2) at least one access resource within the access resource or access resource group and the second reference object or second reference object group belong to different time unit groups.

It should be noted that the reference object group may specifically be at least part of the group.

For example, at least one RO within the RO/RO group precedes the second SSB/SSB group, which may include a case that the RO is different from an RO corresponding to at least part of the SSBs of the second SSB group.

Optionally, the first reference object or first reference object group corresponding to the access resource or access resource group satisfies any one of the following:
(a) being at least one first reference object or first reference object group separately corresponding to at least one access resource or access resource group; and
(b) being at least one first reference object or first reference object group corresponding to all access resources or access resource groups.

Optionally, the second reference object or second reference object group corresponding to the access resource or access resource group satisfies any one of the following:
(a) being at least one second reference object or second reference object group separately corresponding to at least one access resource or access resource group; and
(b) being at least one second reference object or second reference object group corresponding to all access resources or access resource groups.

For example, the RO/RO group has a corresponding first SSB/SSB group and/or second SSB/SSB group, satisfying any one of the following:
i. being a specific/some/each RO/RO group has one or more corresponding first SSB/SSB groups and/or second SSB/SSB groups; and
ii. being all RO/RO groups collectively have one or more corresponding first SSB/SSB groups and/or second SSB/SSB groups.

Optionally, the access resource or access resource group corresponding to the first reference object or first reference object group satisfies any one of the following:
(a) being at least one access resource or access resource group separately corresponding to at least one first reference object or first reference object group; and
(b) being at least one access resource or access resource group corresponding to all first reference objects or reference object groups.

For example, the first SSB/SSB group has a corresponding RO/RO group, which is specifically as follows:
i. a specific/some/each SSB/SSB group has one or more corresponding RO/RO groups, where the RO/RO group is, for example, an invalid RO/RO group, and/or a valid RO/RO group; and
ii. all SSBs/SSB groups collectively have one or more corresponding RO/RO groups, where the RO/RO group is, for example, an invalid RO/RO group, and/or a valid RO/RO group.

Optionally, the access resource or access resource group corresponding to the second reference object or second reference object group satisfies any one of the following:
(a) being at least one access resource or access resource group separately corresponding to at least one second reference object or second reference object group; and
(b) being at least one access resource or access resource group corresponding to all second reference objects or reference object groups.

For example, the second SSB/SSB group has a corresponding RO/RO group, which is specifically as follows:
i. a specific/some/each SSB/SSB group has one or more corresponding RO/RO groups; and
ii. all SSBs/SSB groups collectively have one or more corresponding RO/RO groups.

The following describes a method for determining the first reference object or first reference object group and the second reference object or second reference object group by using the reference object or reference object group being an SSB/SSB group and the access resource or access resource group being an RO/RO group as an example.

Optionally, the first reference object or first reference object group and the second reference object or second reference object group may be determined based on at least one of the following:
(1) First configuration information.

Specifically, the above reference objects or reference object groups may be configured for the terminal by a network-side device such as a base station, and specifically configured through the first configuration information.

Optionally, the first configuration information may be used for configuring at least one of the following:
i. configuring at least one corresponding first reference object or first reference object group separately for at least one access resource or access resource group;
ii. configuring at least one corresponding first reference object or first reference object group for all access resources or access resource groups;
iii. configuring at least one corresponding second reference object or second reference object group separately for at least one access resource or access resource group;
iv. configuring at least one corresponding second reference object or second reference object group for all access resources or access resource groups;
v. configuring at least one corresponding access resource or access resource group separately for at least one first reference object or first reference object group;
vi. configuring at least one corresponding access resource or access resource group for all first reference objects or reference object groups;
vii. configuring at least one corresponding access resource or access resource group separately for at least one second reference object or second reference object group; or
viii. configuring at least one corresponding access resource or access resource group for all second reference objects or reference object groups.

For example, the first configuration information may be used for configuring at least one of the following:
<1> configuring one or more corresponding first SSB/SSB groups and/or second SSB/SSB groups separately for a specific/some/each RO/RO group;
<2> configuring one or more corresponding first SSB/SSB groups and/or second SSB/SSB groups uniformly for all RO/RO groups;
<3> configuring one or more corresponding RO/RO groups separately for a specific/some/each SSB/SSB group, where the RO/RO group is, for example, an invalid RO/RO group, and/or a valid RO/RO group; that is, the configuration explicitly specifies, for the SSB/SSB group, which RO/RO groups need to have validity considered and which do not need to have validity considered; or
<4> configuring one or more corresponding RO/RO groups for all SSBs/SSB groups, where the RO/RO group is, for example, an invalid RO/RO group, and/or a valid RO/RO group.

(2) First indication information, where the first indication information indicates at least part of the first configuration information or second configuration information.

Specifically, if there are multiple configurations, at least part thereof, such as one configuration or a subset, may be indicated through additional signaling; or a piece of new second configuration information may be indicated through additional signaling. Information that can be configured in the second configuration information is substantially consistent with the first configuration information, which is not repeated herein.

(3) First measurement result.

Specifically, the above reference objects or reference object groups may be determined based on the first measurement result. For example:
i. if a measurement result (such as RSRP) of an SSB/SSB group is higher than a specific threshold, it is the first SSB/SSB group; and
ii. if a measurement result (such as RSRP) of an SSB/SSB group is lower than a specific threshold, it is the second SSB/SSB group.

(4) A type.

(5) A use case.

(6) An attribute.

(7) A service.

(8) A scenario.

(9) A corresponding access resource or access resource group.

For example, it may be determined based on the corresponding RO/RO group:
i. if the corresponding RO/RO group is on UL, it is the first SSB/SSB group;
ii. if the corresponding RO/RO group is on SUL, it is the second SSB/SSB group;
iii. if the corresponding RO/RO group uses long format or uses repetition or ECP (extended cyclic prefix, extended cyclic prefix) or a smaller SCS (subcarrier spacing, subcarrier spacing), it is the first SSB/SSB group; and
iv. if the corresponding RO/RO group uses short format or does not use repetition or NCP (normal cyclic prefix, normal cyclic prefix) or a larger SCS, it is the second SSB/SSB group.

(10) A first condition.

Optionally, the first condition may satisfy at least one of the following:
i. the corresponding access resource or access resource group and the reference object or reference object group belong to same resource information;
ii. the corresponding access resource or access resource group and the reference object or reference object group belong to different resource information that is of a same type;
iii. the corresponding access resource or access resource group and the reference object or reference object group belong to different resource information; or
iv. the corresponding access resource or access resource group and the reference object or reference object group belong to different types of resource information; where
the resource information includes at least one of a band (band), a subband (subband), a carrier, and uplink-downlink (Uplink-Downlink, UL-DL) configuration (configuration) information.

For example, at least one of the first SSB/SSB group and the second SSB/SSB group may be determined based on the following situations:
(1) if the corresponding RO/RO group and SSB/SSB group belong to a same band/subband/carrier/UL-DL configuration, or belong to different bands/subbands/carriers/UL-DL configurations of a same type, it is the first SSB/SSB group; and
(2) if the corresponding RO/RO group and SSB/SSB group belong to different or different types of bands/subbands/carriers/UL-DL configurations, it is the second SSB/SSB group.

The following uses the reference object or reference object group being an SSB/SSB group and the access resource or access resource group being an RO/RO group as an example to describe how the terminal determines the validity of the reference object or reference object group.

Optionally, an implementation manner in which the terminal determines the validity of the reference object or reference object group may include:
determining, by the terminal, the reference object or reference object group as valid or invalid based on at least one of the following:
(a) a first access resource or first access resource group corresponding to the reference object or reference object group; or
(b) a second access resource or second access resource group corresponding to the reference object or reference object group.

Optionally, the first access resource or first access resource group may include at least one of the following:
i. An access resource or access resource group corresponding to same or related seventh information as the reference object or reference object group.

Specifically, the first RO/RO group may include an RO/RO group corresponding to a same or related type/use case/attribute/service/scenario as the SSB/SSB group.

For example, the first RO/RO group is used for a near-end UE, and the SSB/SSB group is mainly used for a near-end UE, meaning that a near-end RO affects validity of a near-end SSB; and
for another example, the first RO/RO group is used for a far-end UE, and the SSB/SSB group is mainly used for a far-end UE, meaning that a far-end RO affects validity of a far-end SSB.

ii. An access resource or access resource group corresponding to different seventh information from the reference object or reference object group.

Specifically, the first RO/RO group may include an RO/RO group corresponding to a different type/use case/attribute/service/scenario from the SSB/SSB group.

For example, the first RO/RO group is used for a near-end UE, but the SSB/SSB group is mainly used for a far-end UE, or vice versa, meaning that a near-end RO affects validity of a far-end SSB.

iii. An access resource or access resource group corresponding to eighth information.

Specifically, it may be an RO/RO group corresponding to a specific type/use case/attribute/service/scenario.

iv. A first target access resource or first target access resource group.

Specifically, the first target access resource or first target access resource group may be an RO/RO group that needs to be considered in determining SSB validity.

The seventh information and the eighth information each include at least one of a type, a use case, an attribute, a service, or a scenario.

Optionally, the second access resource or second access resource group may include at least one of the following:
i. An access resource or access resource group corresponding to different ninth information from the reference object or reference object group.

Specifically, the second RO/RO group may include an RO/RO group corresponding to a different type/use case/attribute/service/scenario from the SSB/SSB group.

For example, the second RO/RO group is used for a far-end UE, but the SSB/SSB group is mainly used for a near-end UE, meaning that a far-end RO does not affect validity of a near-end SSB, or a near-end RO does not affect validity of a far-end SSB.

ii. An access resource or access resource group corresponding to tenth information.

Specifically, it may be an RO/RO group corresponding to a specific type/use case/attribute/service/scenario.

iii. A second target access resource or second target access resource group.

Specifically, the second target access resource or second target access resource group may be an RO/RO group that does not need to be considered in determining SSB validity.

The ninth information and the tenth information each include at least one of a type, a use case, an attribute, a service, or a scenario.

Optionally, the invalid reference object or reference object group satisfies at least one of the following, or the valid reference object or reference object group does not satisfy at least one of the following:
(1) At least one reference object within the reference object or reference object group follows the first access resource or first access resource group.
   Specifically, at least one SSB within the SSB/SSB group follows the first RO/RO group.
(2) At least one reference object within the reference object or reference object group precedes the first access resource or first access resource group.
   Specifically, at least one SSB within the SSB/SSB group precedes the first RO/RO group.
(3) An interval between at least one reference object within the reference object or reference object group and the first access resource or first access resource group is not greater than a fifth value.
   Specifically, an interval between at least one SSB within an SSB/SSB group and the first RO/RO is not greater than a fifth value, where the fifth value may be a preset value.
(4) At least one reference object within the reference object or reference object group overlaps with the first access resource or first access resource group.

Specifically, at least one SSB within the SSB/SSB group overlaps with the first RO/RO.

Optionally, the at least one reference object within the reference object or reference object group, and the first access resource or first access resource group belong to a same or different time units or time unit groups, for example, belonging to a same slot.

Optionally, the valid reference object or reference object group satisfies at least one of the following, or the invalid reference object or reference object group does not satisfy at least one of the following:
(1) at least one reference object within the reference object or reference object group and the first access resource or first access resource group belong to different time units; or
(2) at least one reference object within the reference object or reference object group and the first access resource or first access resource group belong to different time unit groups.

Optionally, in a case that at least one reference object within the reference object or reference object group and the first access resource or first access resource group belong to a same time unit and do not satisfy at least one of the following, the reference object or reference object group is valid; or in a case that at least one reference object within the reference object or reference object group and the first access resource or first access resource group belong to a same time unit group and do not satisfy at least one of the following, the reference object or reference object group is valid;
or
in a case that at least one reference object within the reference object or reference object group and the first access resource or first access resource group belong to a same time unit and satisfy at least one of the following, the reference object or reference object group is invalid; or in a case that at least one reference object within the reference object or reference object group and the first access resource or first access resource group belong to a same time unit group and satisfy at least one of the following, the reference object or reference object group is invalid:
(1) the at least one reference object within the reference object or reference object group follows the first access resource or first access resource group;
(2) the at least one reference object within the reference object or reference object group precedes the first access resource or first access resource group;
(3) an interval between the at least one reference object within the reference object or reference object group and the first access resource or first access resource group is not greater than a sixth value; or
(4) the at least one reference object within the reference object or reference object group overlaps with the first access resource or first access resource group.

Optionally, the valid reference object or reference object group satisfies at least one of the following, or the invalid reference object or reference object group does not satisfy at least one of the following:
(1) At least one reference object within the reference object or reference object group follows the second access resource or second access resource group.
   Specifically, at least one SSB within the SSB/SSB group follows the second RO/RO group.
(2) At least one reference object within the reference object or reference object group precedes the second access resource or second access resource group.
   Specifically, at least one SSB within the SSB/SSB group precedes the second RO/RO group.
(3) An interval between at least one reference object within the reference object or reference object group and the second access resource or second access resource group is greater than or equal to a seventh value.
(4) An interval between at least one reference object within the reference object or reference object group and the second access resource or second access resource group is not greater than an eighth value.
   Specifically, an interval between at least one SSB within an SSB/SSB group and the second RO/RO group is not greater than an eighth value, where the eighth value may be a preset value.
(5) At least one reference object within the reference object or reference object group overlaps with the second access resource or second access resource group.

Specifically, at least one SSB within the SSB/SSB group overlaps with the second RO/RO group.

It should be noted that the above-mentioned first value to eighth value may be a same value or different values, which is not limited herein.

Optionally, the valid reference object or reference object group satisfies at least one of the following, or the invalid reference object or reference object group does not satisfy at least one of the following:
(1) at least one reference object within the reference object or reference object group and the second access resource or second access resource group belong to different time units; or
(2) at least one reference object within the reference object or reference object group and the second access resource or second access resource group belong to different time unit groups.

It should be noted that the access resource group may specifically be at least part of the group.

Optionally, the first access resource or first access resource group corresponding to the reference object or reference object group satisfies any one of the following:
(a) being at least one first access resource or first access resource group separately corresponding to at least one reference object or reference object group; and
(b) being at least one first access resource or first access resource group corresponding to all reference objects or reference object groups.

Optionally, the second access resource or second access resource group corresponding to the reference object or reference object group satisfies any one of the following:
(a) being at least one second access resource or second access resource group separately corresponding to at least one reference object or reference object group; and
(b) being at least one second access resource or second access resource group corresponding to all reference objects or reference object groups.

For example, the SSB/SSB group has a corresponding first RO/RO group and/or second RO/RO group, satisfying any one of the following:
i. a specific/some/each SSB/SSB group has one or more corresponding first RO/RO groups and/or second RO/RO groups; and
ii. all SSBs/SSB groups collectively have one or more corresponding first RO/RO groups and/or second RO/RO groups.

Optionally, the reference object or reference object group corresponding to the first access resource or first access resource group satisfies any one of the following:
(a) being at least one reference object or reference object group separately corresponding to at least one first access resource or first access resource group; and
(b) being at least one reference object or reference object group corresponding to all first access resources or access resource groups.

For example, the first RO/RO group has a corresponding SSB/SSB group, which is specifically as follows:
i. a specific/some/each RO/RO group has one or more corresponding SSB/SSB groups, where the SSB/SSB group is, for example, an invalid SSB/SSB group, and/or a valid SSB/SSB group; and
ii. all RO/RO groups collectively have one or more corresponding SSB/SSB groups, where the SSB/SSB group is, for example, an invalid SSB/SSB group, and/or a valid SSB/SSB group.

Optionally, the reference object or reference object group corresponding to the second access resource or second access resource group satisfies any one of the following:
(a) being at least one reference object or reference object group separately corresponding to at least one second access resource or second access resource group; and
(b) being at least one reference object or reference object group corresponding to all second access resources or access resource groups.

For example, the second RO/RO group has a corresponding SSB/SSB group, which is specifically as follows:
i. a specific/some/each RO/RO group has one or more corresponding SSB/SSB groups; and
ii. all RO/RO groups collectively have one or more corresponding SSB/SSB groups.

The following describes a method for determining the first access resource or first access resource group and the second access resource or second access resource group by using the reference object or reference object group being an SSB/SSB group and the access resource or access resource group being an RO/RO group as an example.

Optionally, the first access resource or first access resource group and the second access resource or second access resource group may be determined based on at least one of the following:
(1) Third configuration information.

Specifically, the above access resources or access resource groups may be configured for a terminal by a network-side device such as a base station, and specifically configured through the third configuration information.

Optionally, the third configuration information is used for configuring at least one of the following:
i. configuring at least one corresponding first access resource or first access resource group separately for at least one reference object or reference object group;
ii. configuring at least one corresponding first access resource or first access resource group for all reference objects or reference object groups;
iii. configuring at least one corresponding second access resource or second access resource group separately for at least one reference object or reference object group;
iv. configuring at least one corresponding second access resource or second access resource group for all reference objects or reference object groups;
v. configuring at least one corresponding reference object or reference object group separately for at least one first access resource or first access resource group;
vi. configuring at least one corresponding reference object or reference object group for all first access resources or access resource groups;
vii. configuring at least one corresponding reference object or reference object group separately for at least one second access resource or second access resource group; or
viii. configuring at least one corresponding reference object or reference object group for all second access resources or access resource groups.

For example, the third configuration information may be used for configuring at least one of the following:
<1> configuring one or more corresponding first RO/RO groups and/or second RO/RO groups separately for a specific/some/each SSB/SSB group;
<2> configuring one or more corresponding first RO/RO groups and/or second RO/RO groups uniformly for all SSBs/SSB groups;
<3> configuring one or more corresponding SSB/SSB groups separately for a specific/some/each RO/RO group, where the SSB/SSB group is, for example, an invalid SSB/SSB group, and/or a valid SSB/SSB group; that is, the configuration explicitly specifies, for the RO/RO group, which SSB/SSB groups need to have validity considered and which do not need to have validity considered; or
<4> configuring one or more corresponding SSB/SSB groups for all RO/RO groups, where the SSB/SSB group is, for example, an invalid SSB/SSB group, and/or a valid SSB/SSB group.

(2) Second indication information, where the second indication information indicates at least part of the third configuration information or fourth configuration information.

Specifically, if there are multiple configurations, at least part thereof, such as one configuration or a subset, may be indicated through additional signaling; or a piece of new fourth configuration information may be indicated through additional signaling. Information that can be configured in the fourth configuration information is substantially consistent with the third configuration information, which is not repeated herein.

(3) A second measurement result.

Specifically, it may be determined based on the second measurement result. For example:
i. if a measurement result (such as RSRP) of the RO/RO group is higher than a specific threshold, it is the first RO/RO group; and
ii. if a measurement result (such as RSRP) of the RO/RO group is lower than a specific threshold, it is the second RO/RO group.

(4) A type.

(5) A use case.

(6) An attribute.

(7) A service.

(8) A scenario.

(9) A corresponding reference object or reference object group.

For example, it may be determined based on the corresponding SSB/SSB group:
i. if the corresponding SSB/SSB group is on UL, it is the first RO/RO group;
ii. if the corresponding SSB/SSB group is on SUL, it is the second RO/RO group;
iii. if the corresponding SSB/SSB group uses long format or uses repetition or ECP or a lower SCS, it is the first RO/RO group; and
iv. if the corresponding SSB/SSB group uses short format or does not use repetition or NCP or a higher SCS, it is the second RO/RO group.

(10) A second condition.

Optionally, the second condition may satisfy at least one of the following:
i. the corresponding reference object or reference object group and the access resource or access resource group belong to same resource information;
ii. the corresponding reference object or reference object group and the access resource or access resource group belong to different resource information that is of a same type;
iii. the corresponding reference object or reference object group and the access resource or access resource group belong to different resource information; or
iv. the corresponding reference object or reference object group and the access resource or access resource group belong to different types of resource information; where
the resource information includes at least one of a frequency band, a subband, a carrier, and UL-DL configuration information.

For example, at least one of the first RO/RO group and the second RO/RO group may be determined based on the following situations:
(1) if the corresponding SSB/SSB group and RO/RO group belong to a same band/subband/carrier/UL-DL configuration, or belong to different bands/subbands/carriers/UL-DL configurations of a same type, it is the first RO/RO group;
(2) if the corresponding SSB/SSB group and RO/RO group belong to different or different types of bands/subbands/carriers/UL-DL configurations, it is the first RO/RO group; and
(3) if the corresponding SSB/SSB group and the RO/RO group belong to different or different types of bands/subbands/carriers/UL-DL configurations, it is the second RO/RO group.

It should be noted that the RO/RO group used for mapping to the SSB/SSB group may be the first RO/RO group and/or the second RO/RO group, or may be a third RO/RO group; and the SSB/SSB group used for mapping to the RO/RO group may be the first SSB/SSB group and/or the second SSB/SSB group, or may be a third SSB/SSB group.

The information configuration and processing method according to the embodiments of this application may be applied to a network-side device. The network-side device sends configuration information to a terminal to assist in performing transmission or reception of at least one of a reference object or an access resource.

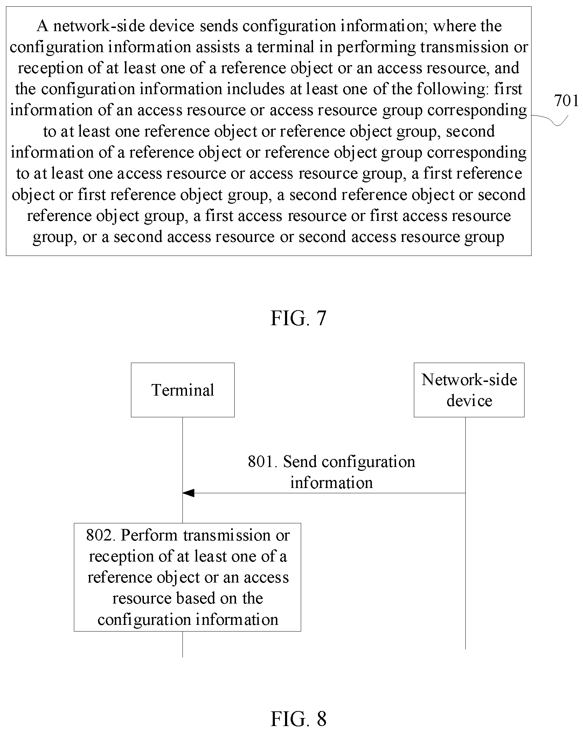

FIG. 7 is a second schematic flowchart of an information configuration and processing method according to an embodiment of this application. As shown in FIG. 7, the method includes step 701.

Step 701: A network-side device sends configuration information; where the configuration information assists a terminal in performing transmission or reception of at least one of a reference object or an access resource, and the configuration information includes at least one of the following: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group.

Specifically, the network-side device sends configuration information to the terminal, and the terminal may perform transmission or reception of at least one of a reference object or an access resource based on the configuration information.

Optionally, the reference object may include at least one of the following:
<1> a synchronization signal;
<2> a broadcast channel;
<3> an SSB;
<4> a CSI-RS; or
<5> a PUSCH.

Optionally, the access resource may include at least one of the following:
<1> a PUSCH;
<2> a PUSCH occasion;
<3> a MIB;
<4> an RO;
<5> a PO;
<6> a PF;
<7> a carrier; or
<8> a search space.

In the information configuration and processing method according to the embodiments of this application, the network-side device sends configuration information to assist the terminal in performing transmission or reception of at least one of a reference object or an access resource, where at least one of the following may be flexibly configured in the configuration information: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group. In the related art, configuration information, such as periods and powers of SSBs, configured through system messages is consistent, and the SSB configurations can be changed only by updating the system messages. By contrast, in the embodiments of this application, the network-side device sends the flexibly configurable configuration information to the terminal, so as to assist the terminal to more flexibly implement transmission or reception of at least one of a reference object or an access resource based on the configuration information, improving the flexibility and utilization of resource allocation.

Optionally, the first information may include at least one of the following:
(1) attribute information of the access resource or access resource group;
(2) a type of the access resource or access resource group;
(3) a time-domain position of the access resource or access resource group;
(4) a frequency-domain position of the access resource or access resource group;
(5) a period of a PRACH;
(6) a period of the access resource or access resource group;
(7) a group size of the access resource group;
(8) the number of access resources corresponding to the access resource group in time domain;
(9) the number of access resources corresponding to the access resource group in frequency domain;
(10) a PRACH time window;
(11) a type of a PRACH sequence;
(12) a length of a PRACH sequence;
(13) a format of a PRACH;
(14) a CP length;
(15) the number of repetitions;
(16) the number of mappings or the minimum number of mappings between the reference object or reference object group and the access resource or access resource group;
(17) an SCS;
(18) a time-domain interval between two access resources or access resource groups;
(19) a frequency-domain interval between two access resources or access resource groups;
(20) configuration information of a first access resource, where the first access resource is an unavailable, invalid, or flexible access resource;
(21) configuration information of a second access resource, where the second access resource is an unavailable, invalid, or flexible access resource within the access resource group;
(22) configuration information of a third access resource, where the third access resource is an available, valid, or stable access resource;
(23) configuration information of a fourth access resource, where the fourth access resource is an available, valid, or stable access resource within the access resource group;
(24) configuration information of a first access resource group, where the first access resource group is an unavailable, invalid, or flexible access resource group; or
(25) configuration information of a second access resource group, where the second access resource group is an available, valid, or stable access resource group.

Optionally, the second information may include at least one of the following:
(1) a type of the reference object or reference object group;
(2) a format of the reference object or reference object group;
(3) a time-domain position of the reference object or reference object group;
(4) a frequency-domain position of the reference object or reference object group;
(5) a period of the reference object or reference object group;
(6) a group size of the reference object group;
(7) the number of reference objects corresponding to the reference object group in time domain;
(8) the number of reference objects corresponding to the reference object group in frequency domain;
(9) a time window of the reference object or reference object group;
(10) a type of a sequence of the reference object or reference object group;
(11) a length of a sequence of the reference object or reference object group;
(12) a CP length;
(13) the number of repetitions;
(14) the number of mappings or the minimum number of mappings between the access resource or access resource group and the reference object or reference object group;
(15) an SCS;
(16) a time-domain interval between two reference objects or reference object groups;
(17) a frequency-domain interval between two reference objects or reference object groups;
(18) configuration information of a first reference object, where the first reference object is a transmitted reference object;
(19) configuration information of a second reference object, where the second reference object is a reference object transmitted within the reference object group; or
(20) configuration information of a first reference object group, where the first reference object group is a transmitted reference object group.

Optionally, the first reference object or first reference object group may include at least one of the following:
i. a reference object or reference object group corresponding to same or related third information as the access resource or access resource group;
ii. a reference object or reference object group corresponding to different third information from the access resource or access resource group;
iii. a reference object or reference object group corresponding to fourth information; or
iv. a first target reference object or first target reference object group; where
the third information and the fourth information each include at least one of a type, a use case, an attribute, a service, or a scenario.

Optionally, the second reference object or second reference object group may include at least one of the following:
i. a reference object or reference object group corresponding to different fifth information from the access resource or access resource group;
ii. a reference object or reference object group corresponding to sixth information; or
iii. a second target reference object or second target reference object group; where
the fifth information and the sixth information each include at least one of a type, a use case, an attribute, a service, or a scenario.

Optionally, in the embodiments of this application, at least one of the following may be performed:
<1> sending, by the network-side device, first configuration information; or
<2> sending, by the network-side device, first indication information, where the first indication information indicates at least part of the first configuration information or second configuration information.

Specifically, both the first configuration information and the first indication information may be sent by the network-side device to the terminal.

Optionally, the first configuration information may be used for configuring at least one of the following:
i. configuring at least one corresponding first reference object or first reference object group separately for at least one access resource or access resource group;
ii. configuring at least one corresponding first reference object or first reference object group for all access resources or access resource groups;
iii. configuring at least one corresponding second reference object or second reference object group separately for at least one access resource or access resource group;
iv. configuring at least one corresponding second reference object or second reference object group for all access resources or access resource groups;
v. configuring at least one corresponding access resource or access resource group separately for at least one first reference object or first reference object group;
vi. configuring at least one corresponding access resource or access resource group for all first reference objects or reference object groups;
vii. configuring at least one corresponding access resource or access resource group separately for at least one second reference object or second reference object group; or
viii. configuring at least one corresponding access resource or access resource group for all second reference objects or reference object groups.

Optionally, the first access resource or first access resource group may include at least one of the following:
i. an access resource or access resource group corresponding to same or related seventh information as the reference object or reference object group;
ii. an access resource or access resource group corresponding to different seventh information from the reference object or reference object group;
iii. an access resource or access resource group corresponding to eighth information; or
iv. a first target access resource or first target access resource group; where
the seventh information and the eighth information each include at least one of a type, a use case, an attribute, a service, or a scenario.

Optionally, the second access resource or second access resource group may include at least one of the following:
i. an access resource or access resource group corresponding to different ninth information from the reference object or reference object group;
ii. an access resource or access resource group corresponding to tenth information; or
iii. a second target access resource or second target access resource group; where
the ninth information and the tenth information each include at least one of a type, a use case, an attribute, a service, or a scenario.

Optionally, in the embodiments of this application, at least one of the following may be performed:
<1> sending, by the network-side device, third configuration information; or
<2> sending, by the network-side device, second indication information, where the second indication information indicates at least part of the third configuration information or fourth configuration information.

Specifically, both the third configuration information and the second indication information may be sent by the network-side device to the terminal.

Optionally, the third configuration information is used for configuring at least one of the following:
i. configuring at least one corresponding first access resource or first access resource group separately for at least one reference object or reference object group;
ii. configuring at least one corresponding first access resource or first access resource group for all reference objects or reference object groups;
iii. configuring at least one corresponding second access resource or second access resource group separately for at least one reference object or reference object group;
iv. configuring at least one corresponding second access resource or second access resource group for all reference objects or reference object groups;
v. configuring at least one corresponding reference object or reference object group separately for at least one first access resource or first access resource group;
vi. configuring at least one corresponding reference object or reference object group for all first access resources or access resource groups;
vii. configuring at least one corresponding reference object or reference object group separately for at least one second access resource or second access resource group; or
viii. configuring at least one corresponding reference object or reference object group for all second access resources or access resource groups.

It should be noted that the RO/RO group used for mapping to the SSB/SSB group may be the first RO/RO group and/or the second RO/RO group, or may be a third RO/RO group; and the SSB/SSB group used for mapping to the RO/RO group may be the first SSB/SSB group and/or the second SSB/SSB group, or may be a third SSB/SSB group.

FIG. 8 is a signaling interaction diagram of an information configuration and processing method according to an embodiment of this application. As shown in FIG. 8, the method includes step 801 and step 802.

Step 801: A network-side device sends configuration information to a terminal; where
the configuration information assists the terminal in performing transmission or reception of at least one of a reference object or an access resource, and the configuration information includes at least one of the following: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group.

Step 802: The terminal performs transmission or reception of at least one of a reference object or an access resource based on the configuration information.

In the embodiments of this application, the network-side device sends configuration information to the terminal, and then the terminal can perform transmission or reception of at least one of a reference object or an access resource based on the configuration information, where at least one of the following may be flexibly configured in the configuration information: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group. In the related art, configuration information, such as periods and powers of SSBs, configured through system messages is consistent, and the SSB configurations can be changed only by updating the system messages. By contrast, in the embodiments of this application, the network-side device sends the flexibly configurable configuration information to the terminal, and the terminal can more flexibly implement transmission or reception of at least one of a reference object or an access resource based on the configuration information, improving the flexibility and utilization of resource allocation.

The following describes the information configuration and processing method according to the embodiments of this application by using examples. Specifically, in the following examples, an RO is used as an example of the access resource, but it may also be replaced by an RO group or another access resource or access resource group, or multiple ROs may be regarded as an RO group, which is not limited in this application.

Embodiment 1: Mutual resource configuration between SSB and RO.

For example, there are four SSBs, which may be classified into the following two groups:
SSB group 0 (SSB group 0): {SSB0}; and
SSB group 1 (SSB group 1): {SSB1, SSB2, SSB3}.

For SSB group 0, one PRACH resource configuration is configured, with a PRACH configuration period of 20 ms and a long-sequence PRACH format. Within the first 10 ms of every 20 ms, one RO is configured at the 1st ms, 4th ms, and 7th ms. This can cover a wide range of the cell and provide services for far-end terminals.

For SSB group 1, one PRACH resource configuration is configured, with a PRACH configuration period of 160 ms and a short-sequence PRACH format. Within the second 10 ms of every 160 ms, one RO is configured at the 2nd ms. This can cover a small range of the cell.

The above configuration is only an example, and specific configuration may be performed on the SSB/SSB group and RO/RO group based on actual situations.

Embodiment 2: RO validity (validation).

In the embodiments of this application:
if an RO/RO group is not before its corresponding first SSB/SSB group, and/or does not satisfy: the RO/RO group follows its corresponding first SSB/SSB group and its interval with the first SSB/SSB group is less than or equal to a threshold, the RO/RO group is valid; and
if an RO/RO group is before/after its corresponding second SSB/SSB group, or before/after its corresponding first SSB/SSB group and its interval with the first SSB/SSB group is less than or equal to a threshold, the RO/RO group is valid.

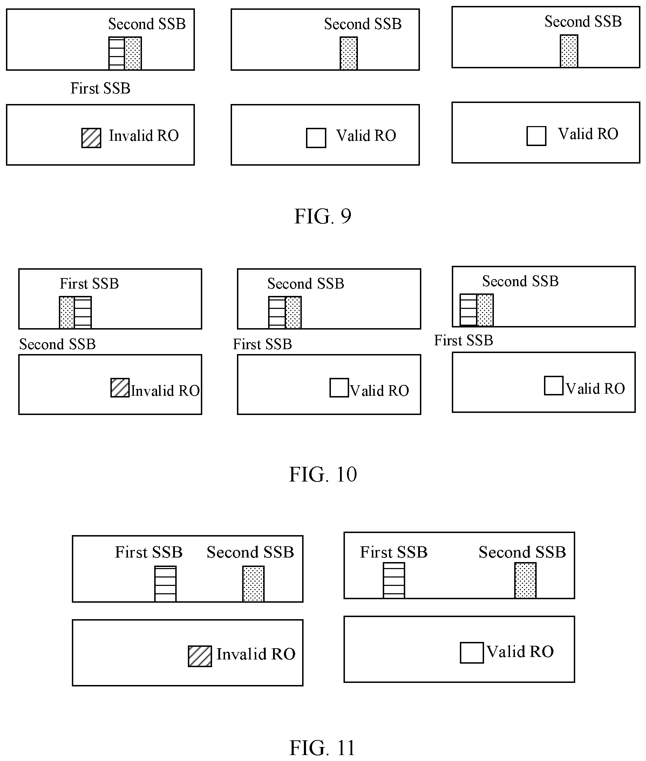

FIG. 9 is a first schematic diagram for determining whether an RO is valid or invalid in an information configuration and processing method according to an embodiment of this application. As shown in FIG. 9:
In the left figure, the RO precedes the first SSB, so the RO is invalid (indicated by diagonal lines) and is not mapped to the SSB.

In the middle figure, the RO precedes the second SSB, so the RO is valid, but the RO is mapped to another SSB, where the another SSB may be a third SSB, which is another SSB in an SSB group to which the first SSB and/or the second SSB belongs.

In the right figure, the RO precedes the second SSB, so the RO is valid, and the RO is mapped to the second SSB.

FIG. 10 is a second schematic diagram for determining whether an RO is valid or invalid in an information configuration and processing method according to an embodiment of this application. As shown in FIG. 10:
In the left figure, the RO follows the first SSB and the second SSB, the interval with the first SSB is less than a threshold, and the interval with the second SSB is greater than or equal to the threshold, so the RO is invalid and is not mapped to the SSBs.

In the middle figure, the RO follows the first SSB and the second SSB, the interval with the first SSB is greater than or equal to a threshold, and the interval with the second SSB is less than or equal to the threshold, so the RO is valid, but the RO is mapped to another SSB, where the another SSB may be a third SSB, which is another SSB in an SSB group to which the first SSB and/or the second SSB belongs.

In the right figure, the RO follows the first SSB and the second SSB, the interval with the first SSB is greater than or equal to a threshold, and the interval with the second SSB is greater than or equal to the threshold, so the RO is valid, and the RO is mapped to the second SSB.

FIG. 11 is a third schematic diagram for determining whether an RO is valid or invalid in an information configuration and processing method according to an embodiment of this application. As shown in FIG. 11:
In the left figure, the RO follows the first SSB and before the second SSB, and the interval with the first SSB is less than a threshold, so the RO is invalid and is not mapped to the SSBs.

In the right figure, the RO follows the first SSB and before the second SSB, and the interval with the first SSB is greater than or equal to a threshold, so the RO is valid, but the RO is mapped to another SSB, where the another SSB may be a third SSB, which is another SSB in an SSB group to which the first SSB and/or the second SSB belongs.

The embodiments of this application focus on some configuration methods for mutually determining resources between SSBs and ROs, improving the resource allocation flexibility and resource utilization.

The information configuration and processing method according to the embodiments of this application may be executed by an information configuration and processing apparatus. In the embodiments of this application, the information configuration and processing method being executed by an information configuration and processing apparatus is used as an example to describe an information configuration and processing apparatus according to an embodiment of this application.

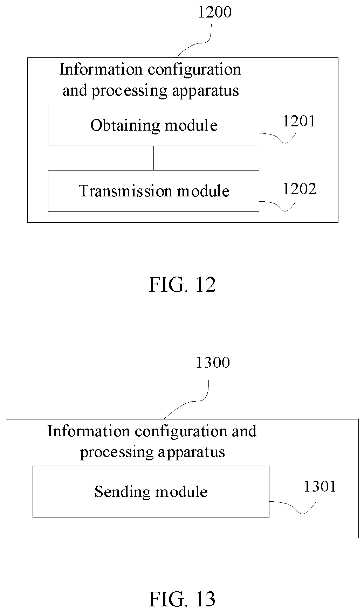

FIG. 12 is a first schematic structural diagram of an information configuration and processing apparatus according to an embodiment of this application. As shown in FIG. 12, the information configuration and processing apparatus 1200 applied to a terminal includes:
an obtaining module 1201 configured to obtain configuration information; where the configuration information includes at least one of the following: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group; and
a transmission module 1202 configured to perform transmission or reception of at least one of a reference object or an access resource based on the configuration information.

In the information configuration and processing apparatus according to the embodiment of this application, the obtaining module of the terminal first obtains configuration information, and then the transmission module performs transmission or reception of at least one of a reference object or an access resource based on the configuration information, where at least one of the following may be flexibly configured in the configuration information: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group. In the related art, configuration information, such as periods and powers of SSBs, configured through system messages is consistent, and the SSB configurations can be changed only by updating the system messages. By contrast, in the embodiments of this application, the terminal can more flexibly implement transmission or reception of at least one of a reference object or an access resource based on the flexibly configurable configuration information, improving the flexibility and utilization of resource allocation.

Optionally, the first information may include at least one of the following:
(1) attribute information of the access resource or access resource group;
(2) a type of the access resource or access resource group;
(3) a time-domain position of the access resource or access resource group;
(4) a frequency-domain position of the access resource or access resource group;
(5) a period of a PRACH;
(6) a period of the access resource or access resource group;
(7) a group size of the access resource group;
(8) the number of access resources corresponding to the access resource group in time domain;
(9) the number of access resources corresponding to the access resource group in frequency domain;
(10) a PRACH time window;
(11) a type of a PRACH sequence;
(12) a length of a PRACH sequence;
(13) a format of a PRACH;
(14) a CP length;
(15) the number of repetitions;
(16) the number of mappings or the minimum number of mappings between the reference object or reference object group and the access resource or access resource group;
(17) an SCS;
(18) a time-domain interval between two access resources or access resource groups;
(19) a frequency-domain interval between two access resources or access resource groups;
(20) configuration information of a first access resource, where the first access resource is an unavailable, invalid, or flexible access resource;
(21) configuration information of a second access resource, where the second access resource is an unavailable, invalid, or flexible access resource within the access resource group;
(22) configuration information of a third access resource, where the third access resource is an available, valid, or stable access resource;
(23) configuration information of a fourth access resource, where the fourth access resource is an available, valid, or stable access resource within the access resource group;
(24) configuration information of a first access resource group, where the first access resource group is an unavailable, invalid, or flexible access resource group; or
(25) configuration information of a second access resource group, where the second access resource group is an available, valid, or stable access resource group.

Optionally, the second information may include at least one of the following:
(1) a type of the reference object or reference object group;
(2) a format of the reference object or reference object group;
(3) a time-domain position of the reference object or reference object group;
(4) a frequency-domain position of the reference object or reference object group;
(5) a period of the reference object or reference object group;
(6) a group size of the reference object group;
(7) the number of reference objects corresponding to the reference object group in time domain;
(8) the number of reference objects corresponding to the reference object group in frequency domain;
(9) a time window of the reference object or reference object group;
(10) a type of a sequence of the reference object or reference object group;
(11) a length of a sequence of the reference object or reference object group;
(12) a CP length;
(13) the number of repetitions;
(14) the number of mappings or the minimum number of mappings between the access resource or access resource group and the reference object or reference object group;
(15) an SCS;
(16) a time-domain interval between two reference objects or reference object groups;
(17) a frequency-domain interval between two reference objects or reference object groups;
(18) configuration information of a first reference object, where the first reference object is a transmitted reference object;
(19) configuration information of a second reference object, where the second reference object is a reference object transmitted within the reference object group; or
(20) configuration information of a first reference object group, where the first reference object group is a transmitted reference object group.

Optionally, the information configuration and processing apparatus 1200 further includes:
a determining module configured to perform at least one of the following:
<1> determining, for the terminal, validity of the access resource or access resource group; or
<2> determining, for the terminal, validity of the reference object or reference object group.

Optionally, the determining module is specifically configured to: determine the access resource or access resource group as valid or invalid based on at least one of the following:
(a) a first reference object or first reference object group corresponding to the access resource or access resource group; or
(b) a second reference object or second reference object group corresponding to the access resource or access resource group.

Optionally, the invalid access resource or access resource group satisfies at least one of the following, or the valid access resource or access resource group does not satisfy at least one of the following:
(1) at least one access resource within the access resource or access resource group follows the first reference object or first reference object group;
(2) at least one access resource within the access resource or access resource group precedes the first reference object or first reference object group;
(3) an interval between at least one access resource within the access resource or access resource group and the first reference object or first reference object group is not greater than a first value; or
(4) at least one access resource within the access resource or access resource group overlaps with the first reference object or first reference object group.

Optionally, the valid access resource or access resource group satisfies at least one of the following, or the invalid access resource or access resource group does not satisfy at least one of the following:
(1) at least one access resource within the access resource or access resource group and the first reference object or first reference object group belong to different time units; or
(2) at least one access resource within the access resource or access resource group and the first reference object or first reference object group belong to different time unit groups.

Optionally, in a case that at least one access resource within the access resource or access resource group and the first reference object or first reference object group belong to a same time unit and do not satisfy at least one of the following, the access resource or access resource group is valid; or in a case that at least one access resource within the access resource or access resource group and the first reference object or first reference object group belong to a same time unit group and do not satisfy at least one of the following, the access resource or access resource group is valid; or in a case that at least one access resource within the access resource or access resource group and the first reference object or first reference object group belong to a same time unit and satisfy at least one of the following, the access resource or access resource group is invalid; or in a case that at least one access resource within the access resource or access resource group and the first reference object or first reference object group belong to a same time unit group and satisfy at least one of the following, the access resource or access resource group is invalid:
(1) the at least one access resource within the access resource or access resource group follows the first reference object or first reference object group;
(2) the at least one access resource within the access resource or access resource group precedes the first reference object or first reference object group;
(3) an interval between the at least one access resource within the access resource or access resource group and the first reference object or first reference object group is not greater than a second value; or
(4) the at least one access resource within the access resource or access resource group overlaps with the first reference object or first reference object group.

Optionally, the first reference object or first reference object group may include at least one of the following:
i. a reference object or reference object group corresponding to same or related third information as the access resource or access resource group;
ii. a reference object or reference object group corresponding to different third information from the access resource or access resource group;
iii. a reference object or reference object group corresponding to fourth information; or
iv. a first target reference object or first target reference object group; where
the third information and the fourth information each include at least one of a type, a use case, an attribute, a service, or a scenario.

Optionally, the valid access resource or access resource group satisfies at least one of the following, or the invalid access resource or access resource group does not satisfy at least one of the following:
(1) at least one access resource within the access resource or access resource group follows the second reference object or second reference object group;
(2) at least one access resource within the access resource or access resource group precedes the second reference object or second reference object group;
(3) an interval between at least one access resource within the access resource or access resource group and the second reference object or second reference object group is greater than or equal to a third value;
(4) an interval between at least one access resource within the access resource or access resource group and the second reference object or second reference object group is not greater than a fourth value; or
(5) at least one access resource within the access resource or access resource group overlaps with the second reference object or second reference object group.

Optionally, the valid access resource or access resource group satisfies at least one of the following, or the invalid access resource or access resource group does not satisfy at least one of the following:
(1) at least one access resource within the access resource or access resource group and the second reference object or second reference object group belong to different time units; or
(2) at least one access resource within the access resource or access resource group and the second reference object or second reference object group belong to different time unit groups.

Optionally, the second reference object or second reference object group may include at least one of the following:
i. a reference object or reference object group corresponding to different fifth information from the access resource or access resource group;
ii. a reference object or reference object group corresponding to sixth information; or
iii. a second target reference object or second target reference object group; where
the fifth information and the sixth information each include at least one of a type, a use case, an attribute, a service, or a scenario.

Optionally, the first reference object or first reference object group corresponding to the access resource or access resource group satisfies any one of the following:
(a) being at least one first reference object or first reference object group separately corresponding to at least one access resource or access resource group; and
(b) being at least one first reference object or first reference object group corresponding to all access resources or access resource groups.

Optionally, the second reference object or second reference object group corresponding to the access resource or access resource group satisfies any one of the following:
(a) being at least one second reference object or second reference object group separately corresponding to at least one access resource or access resource group; and
(b) being at least one second reference object or second reference object group corresponding to all access resources or access resource groups.

Optionally, the access resource or access resource group corresponding to the first reference object or first reference object group satisfies any one of the following:
(a) being at least one access resource or access resource group separately corresponding to at least one first reference object or first reference object group; and
(b) being at least one access resource or access resource group corresponding to all first reference objects or reference object groups.

Optionally, the access resource or access resource group corresponding to the second reference object or second reference object group satisfies any one of the following:
(a) being at least one access resource or access resource group separately corresponding to at least one second reference object or second reference object group; and
(b) being at least one access resource or access resource group corresponding to all second reference objects or reference object groups.

Optionally, the first reference object or first reference object group and the second reference object or second reference object group are determined based on at least one of the following:
(1) first configuration information;
(2) first indication information, where the first indication information indicates at least part of the first configuration information or second configuration information;
(3) a first measurement result;
(4) a type;
(5) a use case;
(6) an attribute;
(7) a service;
(8) a scenario;
(9) a corresponding access resource or access resource group; or
(10) a first condition.

Optionally, the first configuration information may be used for configuring at least one of the following:
i. configuring at least one corresponding first reference object or first reference object group separately for at least one access resource or access resource group;
ii. configuring at least one corresponding first reference object or first reference object group for all access resources or access resource groups;
iii. configuring at least one corresponding second reference object or second reference object group separately for at least one access resource or access resource group;
iv. configuring at least one corresponding second reference object or second reference object group for all access resources or access resource groups;
v. configuring at least one corresponding access resource or access resource group separately for at least one first reference object or first reference object group;
vi. configuring at least one corresponding access resource or access resource group for all first reference objects or reference object groups;
vii. configuring at least one corresponding access resource or access resource group separately for at least one second reference object or second reference object group; or
viii. configuring at least one corresponding access resource or access resource group for all second reference objects or reference object groups.

Optionally, the first condition may satisfy at least one of the following:
i. the corresponding access resource or access resource group and the reference object or reference object group belong to same resource information;
ii. the corresponding access resource or access resource group and the reference object or reference object group belong to different resource information that is of a same type;
iii. the corresponding access resource or access resource group and the reference object or reference object group belong to different resource information; or
iv. the corresponding access resource or access resource group and the reference object or reference object group belong to different types of resource information; where
the resource information includes at least one of a frequency band, a subband, a carrier, and UL-DL configuration information.

Optionally, the determining module is further specifically configured to: determine the reference object or reference object group as valid or invalid based on at least one of the following:
(a) a first access resource or first access resource group corresponding to the reference object or reference object group; or
(b) a second access resource or second access resource group corresponding to the reference object or reference object group.

Optionally, the invalid reference object or reference object group satisfies at least one of the following, or the valid reference object or reference object group does not satisfy at least one of the following:
(1) at least one reference object within the reference object or reference object group follows the first access resource or first access resource group;
(2) at least one reference object within the reference object or reference object group precedes the first access resource or first access resource group;
(3) an interval between at least one reference object within the reference object or reference object group and the first access resource or first access resource group is not greater than a fifth value; or
(4) at least one reference object within the reference object or reference object group overlaps with the first access resource or first access resource group.

Optionally, the valid reference object or reference object group satisfies at least one of the following, or the invalid reference object or reference object group does not satisfy at least one of the following:
(1) at least one reference object within the reference object or reference object group and the first access resource or first access resource group belong to different time units; or
(2) at least one reference object within the reference object or reference object group and the first access resource or first access resource group belong to different time unit groups.

Optionally, in a case that at least one reference object within the reference object or reference object group and the first access resource or first access resource group belong to a same time unit and do not satisfy at least one of the following, the reference object or reference object group is valid; or in a case that at least one reference object within the reference object or reference object group and the first access resource or first access resource group belong to a same time unit group and do not satisfy at least one of the following, the reference object or reference object group is valid; or in a case that at least one reference object within the reference object or reference object group and the first access resource or first access resource group belong to a same time unit and satisfy at least one of the following, the reference object or reference object group is invalid; or in a case that at least one reference object within the reference object or reference object group and the first access resource or first access resource group belong to a same time unit group and satisfy at least one of the following, the reference object or reference object group is invalid:
(1) the at least one reference object within the reference object or reference object group follows the first access resource or first access resource group;
(2) the at least one reference object within the reference object or reference object group precedes the first access resource or first access resource group;
(3) an interval between the at least one reference object within the reference object or reference object group and the first access resource or first access resource group is not greater than a sixth value; or
(4) the at least one reference object within the reference object or reference object group overlaps with the first access resource or first access resource group.

Optionally, the first access resource or first access resource group may include at least one of the following:
i. an access resource or access resource group corresponding to same or related seventh information as the reference object or reference object group;
ii. an access resource or access resource group corresponding to different seventh information from the reference object or reference object group;
iii. an access resource or access resource group corresponding to eighth information; or
iv. a first target access resource or first target access resource group; where
the seventh information and the eighth information each include at least one of a type, a use case, an attribute, a service, or a scenario.

Optionally, the valid reference object or reference object group satisfies at least one of the following, or the invalid reference object or reference object group does not satisfy at least one of the following:
(1) at least one reference object within the reference object or reference object group follows the second access resource or second access resource group;
(2) at least one reference object within the reference object or reference object group precedes the second access resource or second access resource group;
(3) an interval between at least one reference object within the reference object or reference object group and the second access resource or second access resource group is greater than or equal to a seventh value;
(4) an interval between at least one reference object within the reference object or reference object group and the second access resource or second access resource group is not greater than an eighth value; or
(5) at least one reference object within the reference object or reference object group overlaps with the second access resource or second access resource group.

Optionally, the valid reference object or reference object group satisfies at least one of the following, or the invalid reference object or reference object group does not satisfy at least one of the following:
(1) at least one reference object within the reference object or reference object group and the second access resource or second access resource group belong to different time units; or
(2) at least one reference object within the reference object or reference object group and the second access resource or second access resource group belong to different time unit groups.

Optionally, the second access resource or second access resource group may include at least one of the following:
i. an access resource or access resource group corresponding to different ninth information from the reference object or reference object group;
ii. an access resource or access resource group corresponding to tenth information; or
iii. a second target access resource or second target access resource group; where
the ninth information and the tenth information each include at least one of a type, a use case, an attribute, a service, or a scenario.

Optionally, the first access resource or first access resource group corresponding to the reference object or reference object group satisfies any one of the following:
(a) being at least one first access resource or first access resource group separately corresponding to at least one reference object or reference object group; and
(b) being at least one first access resource or first access resource group corresponding to all reference objects or reference object groups.

Optionally, the second access resource or second access resource group corresponding to the reference object or reference object group satisfies any one of the following:
(a) being at least one second access resource or second access resource group separately corresponding to at least one reference object or reference object group; and
(b) being at least one second access resource or second access resource group corresponding to all reference objects or reference object groups.

Optionally, the reference object or reference object group corresponding to the first access resource or first access resource group satisfies any one of the following:
(a) being at least one reference object or reference object group separately corresponding to at least one first access resource or first access resource group; and
(b) being at least one reference object or reference object group corresponding to all first access resources or access resource groups.

Optionally, the reference object or reference object group corresponding to the second access resource or second access resource group satisfies any one of the following:
(a) being at least one reference object or reference object group separately corresponding to at least one second access resource or second access resource group; and
(b) being at least one reference object or reference object group corresponding to all second access resources or access resource groups.

Optionally, the first access resource or first access resource group and the second access resource or second access resource group are determined based on at least one of the following:
(1) third configuration information;
(2) second indication information, where the second indication information indicates at least part of the third configuration information or fourth configuration information;
(3) a second measurement result;
(4) a type;
(5) a use case;
(6) an attribute;
(7) a service;
(8) a scenario;
(9) a corresponding reference object or reference object group; or
(10) a second condition.

Optionally, the third configuration information is used for configuring at least one of the following:
i. configuring at least one corresponding first access resource or first access resource group separately for at least one reference object or reference object group;
ii. configuring at least one corresponding first access resource or first access resource group for all reference objects or reference object groups;
iii. configuring at least one corresponding second access resource or second access resource group separately for at least one reference object or reference object group;
iv. configuring at least one corresponding second access resource or second access resource group for all reference objects or reference object groups;
v. configuring at least one corresponding reference object or reference object group separately for at least one first access resource or first access resource group;
vi. configuring at least one corresponding reference object or reference object group for all first access resources or access resource groups;
vii. configuring at least one corresponding reference object or reference object group separately for at least one second access resource or second access resource group; or
viii. configuring at least one corresponding reference object or reference object group for all second access resources or access resource groups.

Optionally, the second condition may satisfy at least one of the following:
i. the corresponding reference object or reference object group and the access resource or access resource group belong to same resource information;
ii. the corresponding reference object or reference object group and the access resource or access resource group belong to different resource information that is of a same type;
iii. the corresponding reference object or reference object group and the access resource or access resource group belong to different resource information; or
iv. the corresponding reference object or reference object group and the access resource or access resource group belong to different types of resource information; where
the resource information includes at least one of a frequency band, a subband, a carrier, and UL-DL configuration information.

Optionally, the reference object may include at least one of the following:
<1> a synchronization signal;
<2> a broadcast channel;
<3> an SSB;
<4> a CSI-RS; or
<5> a PUSCH.

Optionally, the access resource may include at least one of the following:
<1> a PUSCH;
<2> a PUSCH occasion;
<3> a MIB;
<4> an RO;
<5> a PO;
<6> a PF;
<7> a carrier; or
<8> a search space.

FIG. 13 is a second schematic structural diagram of an information configuration and processing apparatus according to an embodiment of this application. As shown in FIG. 13, the information configuration and processing apparatus 1300 applied to a network-side device includes:
a sending module 1301 configured to send configuration information; where
the configuration information assists a terminal in performing transmission or reception of at least one of a reference object or an access resource, and the configuration information includes at least one of the following: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group.

In the information configuration and processing apparatus according to the embodiment of this application, the sending module of the network-side device sends configuration information to assist the terminal in performing transmission or reception of at least one of a reference object or an access resource, where at least one of the following may be flexibly configured in the configuration information: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group. In the related art, configuration information, such as periods and powers of SSBs, configured through system messages is consistent, and the SSB configurations can be changed only by updating the system messages. By contrast, in the embodiments of this application, the network-side device sends the flexibly configurable configuration information to the terminal, so as to assist the terminal to more flexibly implement transmission or reception of at least one of a reference object or an access resource based on the configuration information, improving the flexibility and utilization of resource allocation.

Optionally, the first information may include at least one of the following:
(1) attribute information of the access resource or access resource group;
(2) a type of the access resource or access resource group;
(3) a time-domain position of the access resource or access resource group;
(4) a frequency-domain position of the access resource or access resource group;
(5) a period of a PRACH;
(6) a period of the access resource or access resource group;
(7) a group size of the access resource group;
(8) the number of access resources corresponding to the access resource group in time domain;
(9) the number of access resources corresponding to the access resource group in frequency domain;
(10) a PRACH time window;
(11) a type of a PRACH sequence;
(12) a length of a PRACH sequence;
(13) a format of a PRACH;
(14) a CP length;
(15) the number of repetitions;
(16) the number of mappings or the minimum number of mappings between the reference object or reference object group and the access resource or access resource group;
(17) an SCS;
(18) a time-domain interval between two access resources or access resource groups;
(19) a frequency-domain interval between two access resources or access resource groups;
(20) configuration information of a first access resource, where the first access resource is an unavailable, invalid, or flexible access resource;
(21) configuration information of a second access resource, where the second access resource is an unavailable, invalid, or flexible access resource within the access resource group;
(22) configuration information of a third access resource, where the third access resource is an available, valid, or stable access resource;
(23) configuration information of a fourth access resource, where the fourth access resource is an available, valid, or stable access resource within the access resource group;
(24) configuration information of a first access resource group, where the first access resource group is an unavailable, invalid, or flexible access resource group; or
(25) configuration information of a second access resource group, where the second access resource group is an available, valid, or stable access resource group.

Optionally, the second information may include at least one of the following:
(1) a type of the reference object or reference object group;
(2) a format of the reference object or reference object group;
(3) a time-domain position of the reference object or reference object group;
(4) a frequency-domain position of the reference object or reference object group;
(5) a period of the reference object or reference object group;
(6) a group size of the reference object group;
(7) the number of reference objects corresponding to the reference object group in time domain;
(8) the number of reference objects corresponding to the reference object group in frequency domain;
(9) a time window of the reference object or reference object group;
(10) a type of a sequence of the reference object or reference object group;
(11) a length of a sequence of the reference object or reference object group;
(12) a CP length;
(13) the number of repetitions;
(14) the number of mappings or the minimum number of mappings between the access resource or access resource group and the reference object or reference object group;
(15) an SCS;
(16) a time-domain interval between two reference objects or reference object groups;
(17) a frequency-domain interval between two reference objects or reference object groups;
(18) configuration information of a first reference object, where the first reference object is a transmitted reference object;
(19) configuration information of a second reference object, where the second reference object is a reference object transmitted within the reference object group; or
(20) configuration information of a first reference object group, where the first reference object group is a transmitted reference object group.

Optionally, the first reference object or first reference object group may include at least one of the following:
i. a reference object or reference object group corresponding to same or related third information as the access resource or access resource group;
ii. a reference object or reference object group corresponding to different third information from the access resource or access resource group;
iii. a reference object or reference object group corresponding to fourth information; or
iv. a first target reference object or first target reference object group; where
the third information and the fourth information each include at least one of a type, a use case, an attribute, a service, or a scenario.

Optionally, the second reference object or second reference object group may include at least one of the following:
i. a reference object or reference object group corresponding to different fifth information from the access resource or access resource group;
ii. a reference object or reference object group corresponding to sixth information; or
iii. a second target reference object or second target reference object group; where
the fifth information and the sixth information each include at least one of a type, a use case, an attribute, a service, or a scenario.

Optionally, the sending module 1301 is further configured to perform at least one of the following:
<1> sending first configuration information; or
<2> sending first indication information, where the first indication information indicates at least part of the first configuration information or second configuration information.

Optionally, the first configuration information may be used for configuring at least one of the following:
i. configuring at least one corresponding first reference object or first reference object group separately for at least one access resource or access resource group;
ii. configuring at least one corresponding first reference object or first reference object group for all access resources or access resource groups;
iii. configuring at least one corresponding second reference object or second reference object group separately for at least one access resource or access resource group;
iv. configuring at least one corresponding second reference object or second reference object group for all access resources or access resource groups;
v. configuring at least one corresponding access resource or access resource group separately for at least one first reference object or first reference object group;
vi. configuring at least one corresponding access resource or access resource group for all first reference objects or reference object groups;
vii. configuring at least one corresponding access resource or access resource group separately for at least one second reference object or second reference object group; or
viii. configuring at least one corresponding access resource or access resource group for all second reference objects or reference object groups.

Optionally, the first access resource or first access resource group may include at least one of the following:
i. an access resource or access resource group corresponding to same or related seventh information as the reference object or reference object group;
ii. an access resource or access resource group corresponding to different seventh information from the reference object or reference object group;
iii. an access resource or access resource group corresponding to eighth information; or
iv. a first target access resource or first target access resource group; where
the seventh information and the eighth information each include at least one of a type, a use case, an attribute, a service, or a scenario.

Optionally, the second access resource or second access resource group may include at least one of the following:
i. an access resource or access resource group corresponding to different ninth information from the reference object or reference object group;
ii. an access resource or access resource group corresponding to tenth information; or
iii. a second target access resource or second target access resource group; where
the ninth information and the tenth information each include at least one of a type, a use case, an attribute, a service, or a scenario.

Optionally, the sending module 1301 is further configured to perform at least one of the following:
<1> sending third configuration information; or
<2> sending second indication information, where the second indication information indicates at least part of the third configuration information or fourth configuration information.

Optionally, the third configuration information is used for configuring at least one of the following:
i. configuring at least one corresponding first access resource or first access resource group separately for at least one reference object or reference object group;
ii. configuring at least one corresponding first access resource or first access resource group for all reference objects or reference object groups;
iii. configuring at least one corresponding second access resource or second access resource group separately for at least one reference object or reference object group;
iv. configuring at least one corresponding second access resource or second access resource group for all reference objects or reference object groups;
v. configuring at least one corresponding reference object or reference object group separately for at least one first access resource or first access resource group;
vi. configuring at least one corresponding reference object or reference object group for all first access resources or access resource groups;
vii. configuring at least one corresponding reference object or reference object group separately for at least one second access resource or second access resource group; or
viii. configuring at least one corresponding reference object or reference object group for all second access resources or access resource groups.

Optionally, the reference object may include at least one of the following:
<1> a synchronization signal;
<2> a broadcast channel;
<3> an SSB;
<4> a CSI-RS; or
<5> a PUSCH.

Optionally, the access resource may include at least one of the following:
<1> a PUSCH;
<2> a PUSCH occasion;
<3> a MIB;
<4> an RO;
<5> a PO;
<6> a PF;
<7> a carrier; or
<8> a search space.

The information configuration and processing apparatus in the embodiments of this application may be an electronic device, such as an electronic device having an operating system, or a component in an electronic device, such as an integrated circuit or a chip. The electronic device may be a terminal, or may be another device different from a terminal. For example, the terminal may include but is not limited to the types of the terminal 11 listed above, and the another device may be a server, a network attached storage (Network Attached Storage, NAS), or the like, which are not specifically limited in the embodiments of this application.

The information configuration and processing apparatus according to the embodiments of this application can implement various processes implemented by the method embodiments shown in FIG. 6 to FIG. 8, with the same technical effects achieved. To avoid repetition, details are not described herein again.

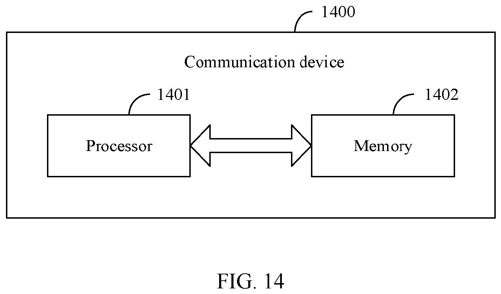

FIG. 14 is a schematic structural diagram of a communication device according to an embodiment of this application. As shown in FIG. 14, an embodiment of this application further provides a communication device 1400 including a processor 1401 and a memory 1402. A program or instructions capable of running on the processor 1401 are stored on the memory 1402. In a case that the communication device 1400 is a terminal, the program or instructions, when executed by the processor 1401, implement the steps of the foregoing embodiments of the information configuration and processing method on the terminal side, with the same technical effects achieved. In a case that the communication device 1400 is a network-side device, the program or instructions, when executed by the processor 1401, implement the steps of the foregoing embodiments of the information configuration and processing method on the network-side device, with the same technical effects achieved. To avoid repetition, details are not described herein again.

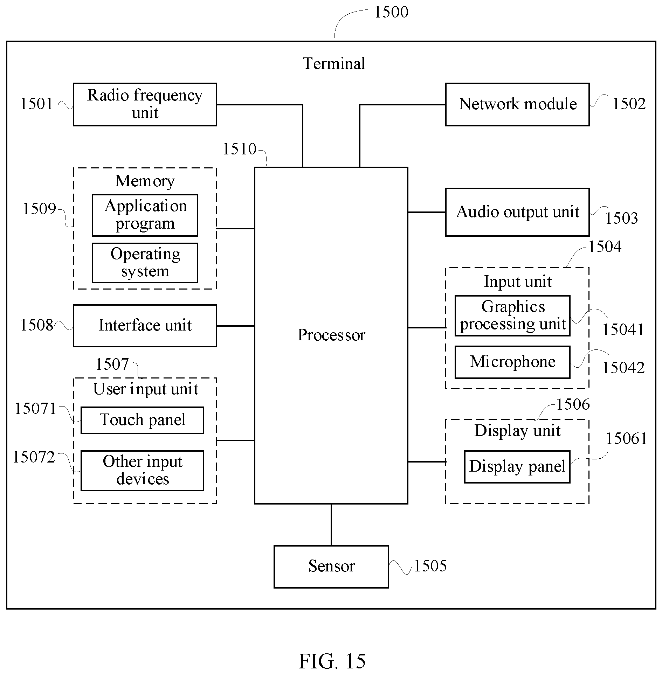

An embodiment of this application further provides a terminal including a processor and a communication interface, where the communication interface is coupled to the processor, and the processor is configured to run a program or instructions to implement the steps of the method embodiment shown in FIG. 6. This terminal embodiment corresponds to the foregoing terminal-side method embodiment, and the implementation processes and implementations of the foregoing method embodiment can all be applied to this terminal embodiment, with the same technical effects achieved. Specifically, FIG. 15 is a schematic diagram of a hardware structure of a terminal according to an embodiment of this application.

The terminal 1500 includes but is not limited to at least some components among: a radio frequency unit 1501, a network module 1502, an audio output unit 1503, an input unit 1504, a sensor 1505, a display unit 1506, a user input unit 1507, an interface unit 1508, a memory 1509, and a processor 1510.

Those skilled in the art can understand that the terminal 1500 may further include a power supply (such as a battery) supplying power to the components, and the power supply may be logically connected to the processor 1510 through a power management system, so as to implement functions such as charging management, discharging management, and power consumption management by using the power management system. The structure of the terminal shown in FIG. 15 does not constitute any limitation on the terminal. The terminal may include more or fewer components than shown in the figure, or a combination of some components, or the components disposed differently. Details are not described herein.

It should be understood that in the embodiments of this application, the input unit 1504 may include a graphics processing unit (Graphics Processing Unit, GPU) 15041 and a microphone 15042. The graphics processing unit 15041 processes image data of a still picture or video obtained by an image capture apparatus (such as a camera) in a video capture mode or an image capture mode. The display unit 1506 may include a display panel 15061, and the display panel 15061 may be configured in the form of a liquid crystal display, an organic light-emitting diode, or the like. The user input unit 1507 includes at least one of a touch panel 15071 and other input devices 15072. The touch panel 15071 is also referred to as a touchscreen. The touch panel 15071 may include two parts: a touch detection apparatus and a touch controller. The other input devices 15072 may include but are not limited to a physical keyboard, a function key (such as a volume control key or an on/off key), a trackball, a mouse, and a joystick. Details are not described herein.

In the embodiments of this application, after receiving downlink data from a network-side device, the radio frequency unit 1501 may transmit the received downlink data to the processor 1510 for processing. In addition, the radio frequency unit 1501 may send uplink data to the network-side device. Typically, the radio frequency unit 1501 includes but is not limited to an antenna, an amplifier, a transceiver, a coupler, a low noise amplifier, and a duplexer.

The memory 1509 may be configured to store a software program or instructions and various data. The memory 1509 may mainly include a first storage area for storing a program or instructions and a second storage area for storing data. The first storage area may store an operating system, an application program or instructions required by at least one function (for example, a sound play function or an image play function), and the like. In addition, the memory 1509 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), or a direct rambus random access memory (Direct Rambus RAM, DRRAM). The memory 1509 in the embodiments of this application includes but is not limited to these and any other suitable types of memory.

The processor 1510 may include one or more processing units. Optionally, the processor 1510 integrates an application processor and a modem processor. The application processor mainly processes operations related to an operating system, a user interface, an application program, or the like. The modem processor, such as a baseband processor, mainly processes radio communication signals. It can be understood that the modem processor may alternatively be not integrated into the processor 1510.

The processor 1510 is configured to:
obtain configuration information; where the configuration information includes at least one of the following: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group; and
perform transmission or reception of at least one of a reference object or an access resource based on the configuration information.

It can be understood that for implementation processes of the implementations mentioned in this embodiment, reference may be made to the relevant descriptions of the information configuration and processing method in the method embodiments, with the same or corresponding technical effects achieved. To avoid repetition, details are not described herein again.

An embodiment of this application further provides a network-side device including a processor and a communication interface, where the communication interface is coupled to the processor, and the processor is configured to run a program or instructions to implement the steps of the method embodiment shown in FIG. 7. This network-side device embodiment corresponds to the foregoing method embodiment on a network-side device, and the implementation processes and implementations of the foregoing method embodiments can all be applied to this network-side device embodiment, with the same technical effects achieved.

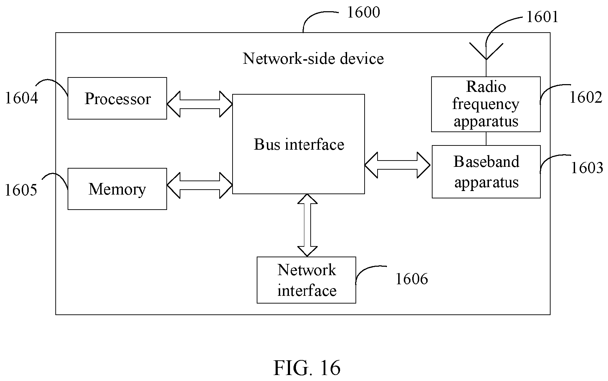

Specifically, the embodiments of this application further provide a network-side device. FIG. 16 is a schematic structural diagram of a network-side device according to an embodiment of this application. As shown in FIG. 16, the network-side device 1600 includes: an antenna 1601, a radio frequency apparatus 1602, a baseband apparatus 1603, a processor 1604, and a memory 1605. The antenna 1601 is connected to the radio frequency apparatus 1602. In an uplink direction, the radio frequency apparatus 1602 receives information via the antenna 1601, and sends the received information to the baseband apparatus 1603 for processing. In a downlink direction, the baseband apparatus 1603 processes to-be-sent information, and sends the information to the radio frequency apparatus 1602; and the radio frequency apparatus 1602 processes the received information and then sends the information out via the antenna 1601.

The method performed by the network-side device in the foregoing embodiments may be implemented in the baseband apparatus 1603, and the baseband apparatus 1603 includes a baseband processor.

The baseband apparatus 1603 may include, for example, at least one baseband board, where multiple chips are disposed on the baseband board. As shown in FIG. 16, one chip is, for example, a baseband processor, and connected to the memory 1605 via a bus interface, to invoke the program in the memory 1605 to perform the operations of the network-side device shown in the foregoing method embodiments.

The network-side device may further include a network interface 1606. The interface is, for example, a common public radio interface (Common Public Radio Interface, CPRI).

Specifically, the network-side device 1600 in the embodiments of this application further includes: instructions or a program stored on the memory 1605 and capable of running on the processor 1604. The processor 1604 invokes the instructions or program in the memory 1605 to perform the method performed by the modules shown in FIG. 13, with the same technical effects achieved. To avoid repetition, details are not described herein again.

An embodiment of this application further provides a readable storage medium, where the readable storage medium stores a program or instructions. When the program or instructions are executed by a processor, the processes of the foregoing information configuration and processing method embodiments are implemented, with the same technical effects achieved. To avoid repetition, details are not described herein again.

The processor is a processor in the terminal described in the foregoing embodiments. The readable storage medium includes a computer-readable storage medium, such as a computer read-only memory ROM, a random access memory RAM, a magnetic disk, or a compact disc. In some examples, the readable storage medium may be a non-transitory readable storage medium.

An embodiment of this application further provides a chip. The chip includes a processor and a communication interface, where the communication interface is coupled to the processor, and the processor is configured to run a program or instructions to implement the processes of the foregoing information configuration and processing method embodiments, with the same technical effects achieved. To avoid repetition, details are not described herein again.

It should be understood that the chip mentioned in the embodiments of this application may also be referred to as a system-level chip, a system chip, a chip system, a system on chip, or the like.

An embodiment of this application further provides a computer program/program product, where the computer program/program product is stored in a storage medium, and the computer program/program product is executed by at least one processor to implement the processes of the foregoing information configuration and processing method embodiments, with the same technical effects achieved. To avoid repetition, details are not described herein again.

The embodiments of this application further provide an information configuration and processing system including: a terminal and a network-side device, where the terminal may be configured to perform the steps of the foregoing information configuration and processing method on the terminal side, and the network-side device may be configured to perform the steps of the foregoing information configuration and processing method on the network-side device.

It should be noted that in this specification, the terms "include", "comprise", or any of their variants are intended to cover a non-exclusive inclusion, such that a process, method, article, or apparatus that includes a series of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, those skilled in the art may clearly understand that the method in the foregoing embodiments may be implemented by software with a necessary general hardware platform. Certainly, the method in the foregoing embodiments may also be implemented by hardware. The computer software product is stored in a storage medium (such as a ROM, a RAM, a magnetic disk, or a compact disc), and includes several instructions for instructing a terminal or a network-side device to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other implementations without departing from principles of this application and the protection scope of the claims, and all such implementations shall fall within the protection scope of this application.

## Claims

1. An information configuration and processing method, comprising:
obtaining, by a terminal, configuration information; wherein the configuration information comprises at least one of the following: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group; and
performing, by the terminal, transmission or reception of at least one of a reference object or an access resource based on the configuration information.

2. The information configuration and processing method according to claim 1, wherein the first information comprises at least one of the following:
attribute information of the access resource or access resource group;
a type of the access resource or access resource group;
a time-domain position of the access resource or access resource group;
a frequency-domain position of the access resource or access resource group;
a period of a physical random access channel PRACH;
a period of the access resource or access resource group;
a group size of the access resource group;
the number of access resources corresponding to the access resource group in time domain;
the number of access resources corresponding to the access resource group in frequency domain;
a PRACH time window;
a type of a PRACH sequence;
a length of a PRACH sequence;
a format (format) of a PRACH;
a cyclic prefix CP length;
the number of repetitions (Repetition);
the number of mappings or the minimum number of mappings between the reference object or reference object group and the access resource or access resource group;
a subcarrier spacing SCS;
a time-domain interval between two access resources or access resource groups;
a frequency-domain interval between two access resources or access resource groups;
configuration information of a first access resource, wherein the first access resource is an unavailable, invalid, or flexible access resource;
configuration information of a second access resource, wherein the second access resource is an unavailable, invalid, or flexible access resource within the access resource group;
configuration information of a third access resource, wherein the third access resource is an available, valid, or stable access resource;
configuration information of a fourth access resource, wherein the fourth access resource is an available, valid, or stable access resource within the access resource group;
configuration information of a first access resource group, wherein the first access resource group is an unavailable, invalid, or flexible access resource group; or
configuration information of a second access resource group, wherein the second access resource group is an available, valid, or stable access resource group.

3. The information configuration and processing method according to claim 1, wherein the second information comprises at least one of the following:
a type of the reference object or reference object group;
a format of the reference object or reference object group;
a time-domain position of the reference object or reference object group;
a frequency-domain position of the reference object or reference object group;
a period of the reference object or reference object group;
a group size of the reference object group;
the number of reference objects corresponding to the reference object group in time domain;
the number of reference objects corresponding to the reference object group in frequency domain;
a time window of the reference object or reference object group;
a type of a sequence of the reference object or reference object group;
a length of a sequence of the reference object or reference object group;
a CP length;
the number of repetitions;
the number of mappings or the minimum number of mappings between the access resource or access resource group and the reference object or reference object group;
an SCS;
a time-domain interval between two reference objects or reference object groups;
a frequency-domain interval between two reference objects or reference object groups;
configuration information of a first reference object, wherein the first reference object is a transmitted reference object;
configuration information of a second reference object, wherein the second reference object is a reference object transmitted within the reference object group; or
configuration information of a first reference object group, wherein the first reference object group is a transmitted reference object group.

4. The information configuration and processing method according to any one of claims 1 to 3, wherein the method further comprises at least one of the following:
determining, by the terminal, validity of the access resource or access resource group; or
determining, by the terminal, validity of the reference object or reference object group.

5. The information configuration and processing method according to claim 4, wherein the determining, by the terminal, validity of the access resource or access resource group comprises:
determining, by the terminal, the access resource or access resource group as valid or invalid based on at least one of the following:
a first reference object or first reference object group corresponding to the access resource or access resource group; or
a second reference object or second reference object group corresponding to the access resource or access resource group.

6. The information configuration and processing method according to claim 5, wherein the invalid access resource or access resource group satisfies at least one of the following, or the valid access resource or access resource group does not satisfy at least one of the following:
at least one access resource within the access resource or access resource group follows the first reference object or first reference object group;
at least one access resource within the access resource or access resource group precedes the first reference object or first reference object group;
an interval between at least one access resource within the access resource or access resource group and the first reference object or first reference object group is not greater than a first value; or
at least one access resource within the access resource or access resource group overlaps with the first reference object or first reference object group.

7. The information configuration and processing method according to claim 5, wherein in a case that at least one access resource within the access resource or access resource group and the first reference object or first reference object group belong to a same time unit and do not satisfy at least one of the following, the access resource or access resource group is valid; or in a case that at least one access resource within the access resource or access resource group and the first reference object or first reference object group belong to a same time unit group and do not satisfy at least one of the following, the access resource or access resource group is valid; or in a case that at least one access resource within the access resource or access resource group and the first reference object or first reference object group belong to a same time unit and satisfy at least one of the following, the access resource or access resource group is invalid; or in a case that at least one access resource within the access resource or access resource group and the first reference object or first reference object group belong to a same time unit group and satisfy at least one of the following, the access resource or access resource group is invalid:
the at least one access resource within the access resource or access resource group follows the first reference object or first reference object group;
the at least one access resource within the access resource or access resource group precedes the first reference object or first reference object group;
an interval between the at least one access resource within the access resource or access resource group and the first reference object or first reference object group is not greater than a second value; or
the at least one access resource within the access resource or access resource group overlaps with the first reference object or first reference object group.

8. The information configuration and processing method according to any one of claims 1 to 7, wherein the first reference object or first reference object group comprises at least one of the following:
a reference object or reference object group corresponding to same or related third information as the access resource or access resource group;
a reference object or reference object group corresponding to different third information from the access resource or access resource group;
a reference object or reference object group corresponding to fourth information; or
a first target reference object or first target reference object group; wherein
the third information and the fourth information each comprise at least one of a type, a use case, an attribute, a service, or a scenario.

9. The information configuration and processing method according to claim 5, wherein the valid access resource or access resource group satisfies at least one of the following, or the invalid access resource or access resource group does not satisfy at least one of the following:
at least one access resource within the access resource or access resource group follows the second reference object or second reference object group;
at least one access resource within the access resource or access resource group precedes the second reference object or second reference object group;
an interval between at least one access resource within the access resource or access resource group and the second reference object or second reference object group is greater than or equal to a third value;
an interval between at least one access resource within the access resource or access resource group and the second reference object or second reference object group is not greater than a fourth value; or
at least one access resource within the access resource or access resource group overlaps with the second reference object or second reference object group.

10. The information configuration and processing method according to any one of claims 1 to 9, wherein the second reference object or second reference object group comprises at least one of the following:
a reference object or reference object group corresponding to different fifth information from the access resource or access resource group;
a reference object or reference object group corresponding to sixth information; or
a second target reference object or second target reference object group; wherein
the fifth information and the sixth information each comprise at least one of a type, a use case, an attribute, a service, or a scenario.

11. The information configuration and processing method according to any one of claims 5 to 10, wherein the first reference object or first reference object group and the second reference object or second reference object group are determined based on at least one of the following:
first configuration information;
first indication information, wherein the first indication information indicates at least part of the first configuration information or second configuration information;
a first measurement result;
a type;
a use case;
an attribute;
a service;
a scenario;
a corresponding access resource or access resource group; or
a first condition.

12. The information configuration and processing method according to claim 4, wherein the determining, by the terminal, validity of the reference object or reference object group comprises:
determining, by the terminal, the reference object or reference object group as valid or invalid based on at least one of the following:
a first access resource or first access resource group corresponding to the reference object or reference object group; or
a second access resource or second access resource group corresponding to the reference object or reference object group.

13. The information configuration and processing method according to claim 12, wherein the invalid reference object or reference object group satisfies at least one of the following, or the valid reference object or reference object group does not satisfy at least one of the following:
at least one reference object within the reference object or reference object group follows the first access resource or first access resource group;
at least one reference object within the reference object or reference object group precedes the first access resource or first access resource group;
an interval between at least one reference object within the reference object or reference object group and the first access resource or first access resource group is not greater than a fifth value; or
at least one reference object within the reference object or reference object group overlaps with the first access resource or first access resource group.

14. The information configuration and processing method according to claim 12, wherein in a case that at least one reference object within the reference object or reference object group and the first access resource or first access resource group belong to a same time unit and do not satisfy at least one of the following, the reference object or reference object group is valid; or in a case that at least one reference object within the reference object or reference object group and the first access resource or first access resource group belong to a same time unit group and do not satisfy at least one of the following, the reference object or reference object group is valid; or in a case that at least one reference object within the reference object or reference object group and the first access resource or first access resource group belong to a same time unit and satisfy at least one of the following, the reference object or reference object group is invalid; or in a case that at least one reference object within the reference object or reference object group and the first access resource or first access resource group belong to a same time unit group and satisfy at least one of the following, the reference object or reference object group is invalid:
the at least one reference object within the reference object or reference object group follows the first access resource or first access resource group;
the at least one reference object within the reference object or reference object group precedes the first access resource or first access resource group;
an interval between the at least one reference object within the reference object or reference object group and the first access resource or first access resource group is not greater than a sixth value; or
the at least one reference object within the reference object or reference object group overlaps with the first access resource or first access resource group.

15. The information configuration and processing method according to claim 12, wherein the valid reference object or reference object group satisfies at least one of the following, or the invalid reference object or reference object group does not satisfy at least one of the following:
at least one reference object within the reference object or reference object group follows the second access resource or second access resource group;
at least one reference object within the reference object or reference object group precedes the second access resource or second access resource group;
an interval between at least one reference object within the reference object or reference object group and the second access resource or second access resource group is greater than or equal to a seventh value;
an interval between at least one reference object within the reference object or reference object group and the second access resource or second access resource group is not greater than an eighth value; or
at least one reference object within the reference object or reference object group overlaps with the second access resource or second access resource group.

16. The information configuration and processing method according to any one of claims 12 to 15, wherein the first access resource or first access resource group and the second access resource or second access resource group are determined based on at least one of the following:
third configuration information;
second indication information, wherein the second indication information indicates at least part of the third configuration information or fourth configuration information;
a second measurement result;
a type;
a use case;
an attribute;
a service;
a scenario;
a corresponding reference object or reference object group; or
a second condition.

17. The information configuration and processing method according to any one of claims 1 to 16, wherein the reference object comprises at least one of the following:
a synchronization signal;
a broadcast channel;
a synchronization signal/physical broadcast channel block SSB;
a channel state information reference signal CSI-RS; or
a physical uplink shared channel PUSCH.

18. The information configuration and processing method according to any one of claims 1 to 17, wherein the access resource comprises at least one of the following:
a PUSCH;
a PUSCH transmission occasion (Occasion);
a master information block MIB;
a random access channel transmission occasion RO;
a paging occasion PO;
a paging frame PF;
a carrier (carrier); or
a search space.

19. An information configuration and processing method, comprising:
sending, by a network-side device, configuration information; wherein
the configuration information assists a terminal in performing transmission or reception of at least one of a reference object or an access resource, and the configuration information comprises at least one of the following: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group.

20. The information configuration and processing method according to claim 19, wherein the first information comprises at least one of the following:
attribute information of the access resource or access resource group;
a type of the access resource or access resource group;
a time-domain position of the access resource or access resource group;
a frequency-domain position of the access resource or access resource group;
a period of a physical random access channel PRACH;
a period of the access resource or access resource group;
a group size of the access resource group;
the number of access resources corresponding to the access resource group in time domain;
the number of access resources corresponding to the access resource group in frequency domain;
a PRACH time window;
a type of a PRACH sequence;
a length of a PRACH sequence;
a format (format) of a PRACH;
a cyclic prefix CP length;
the number of repetitions (Repetition);
the number of mappings or the minimum number of mappings between the reference object or reference object group and the access resource or access resource group;
a subcarrier spacing SCS;
a time-domain interval between two access resources or access resource groups;
a frequency-domain interval between two access resources or access resource groups;
configuration information of a first access resource, wherein the first access resource is an unavailable, invalid, or flexible access resource;
configuration information of a second access resource, wherein the second access resource is an unavailable, invalid, or flexible access resource within the access resource group;
configuration information of a third access resource, wherein the third access resource is an available, valid, or stable access resource;
configuration information of a fourth access resource, wherein the fourth access resource is an available, valid, or stable access resource within the access resource group;
configuration information of a first access resource group, wherein the first access resource group is an unavailable, invalid, or flexible access resource group; or
configuration information of a second access resource group, wherein the second access resource group is an available, valid, or stable access resource group.

21. The information configuration and processing method according to claim 19, wherein the second information comprises at least one of the following:
a type of the reference object or reference object group;
a format of the reference object or reference object group;
a time-domain position of the reference object or reference object group;
a frequency-domain position of the reference object or reference object group;
a period of the reference object or reference object group;
a group size of the reference object group;
the number of reference objects corresponding to the reference object group in time domain;
the number of reference objects corresponding to the reference object group in frequency domain;
a time window of the reference object or reference object group;
a type of a sequence of the reference object or reference object group;
a length of a sequence of the reference object or reference object group;
a CP length;
the number of repetitions;
the number of mappings or the minimum number of mappings between the access resource or access resource group and the reference object or reference object group;
an SCS;
a time-domain interval between two reference objects or reference object groups;
a frequency-domain interval between two reference objects or reference object groups;
configuration information of a first reference object, wherein the first reference object is a transmitted reference object;
configuration information of a second reference object, wherein the second reference object is a reference object transmitted within the reference object group; or
configuration information of a first reference object group, wherein the first reference object group is a transmitted reference object group.

22. The information configuration and processing method according to claim 19, wherein the first reference object or first reference object group comprises at least one of the following:
a reference object or reference object group corresponding to same or related third information as the access resource or access resource group;
a reference object or reference object group corresponding to different third information from the access resource or access resource group;
a reference object or reference object group corresponding to fourth information; or
a first target reference object or first target reference object group; wherein
the third information and the fourth information each comprise at least one of a type, a use case, an attribute, a service, or a scenario.

23. The information configuration and processing method according to claim 19, wherein the second reference object or second reference object group comprises at least one of the following:
a reference object or reference object group corresponding to different fifth information from the access resource or access resource group;
a reference object or reference object group corresponding to sixth information; or
a second target reference object or second target reference object group; wherein
the fifth information and the sixth information each comprise at least one of a type, a use case, an attribute, a service, or a scenario.

24. The information configuration and processing method according to claim 19, wherein the method further comprises at least one of the following:
sending, by the network-side device, first configuration information; or
sending, by the network-side device, first indication information, wherein the first indication information indicates at least part of the first configuration information or second configuration information.

25. The information configuration and processing method according to claim 24, wherein the first configuration information is used for configuring at least one of the following:
configuring at least one corresponding first reference object or first reference object group separately for at least one access resource or access resource group;
configuring at least one corresponding first reference object or first reference object group for all access resources or access resource groups;
configuring at least one corresponding second reference object or second reference object group separately for at least one access resource or access resource group;
configuring at least one corresponding second reference object or second reference object group for all access resources or access resource groups;
configuring at least one corresponding access resource or access resource group separately for at least one first reference object or first reference object group;
configuring at least one corresponding access resource or access resource group for all first reference objects or reference object groups;
configuring at least one corresponding access resource or access resource group separately for at least one second reference object or second reference object group; or
configuring at least one corresponding access resource or access resource group for all second reference objects or reference object groups.

26. The information configuration and processing method according to claim 19, wherein the method further comprises at least one of the following:
sending, by the network-side device, third configuration information; or
sending, by the network-side device, second indication information, wherein the second indication information indicates at least part of the third configuration information or fourth configuration information.

27. The information configuration and processing method according to claim 26, wherein the third configuration information is used for configuring at least one of the following:
configuring at least one corresponding first access resource or first access resource group separately for at least one reference object or reference object group;
configuring at least one corresponding first access resource or first access resource group for all reference objects or reference object groups;
configuring at least one corresponding second access resource or second access resource group separately for at least one reference object or reference object group;
configuring at least one corresponding second access resource or second access resource group for all reference objects or reference object groups;
configuring at least one corresponding reference object or reference object group separately for at least one first access resource or first access resource group;
configuring at least one corresponding reference object or reference object group for all first access resources or access resource groups;
configuring at least one corresponding reference object or reference object group separately for at least one second access resource or second access resource group; or
configuring at least one corresponding reference object or reference object group for all second access resources or access resource groups.

28. An information configuration and processing apparatus, comprising:
an obtaining module configured to obtain configuration information; wherein the configuration information comprises at least one of the following: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group; and
a transmission module configured to perform transmission or reception of at least one of a reference object or an access resource based on the configuration information.

29. An information configuration and processing apparatus, comprising:
a sending module configured to send configuration information; wherein
the configuration information assists a terminal in performing transmission or reception of at least one of a reference object or an access resource, and the configuration information comprises at least one of the following: first information of an access resource or access resource group corresponding to at least one reference object or reference object group, second information of a reference object or reference object group corresponding to at least one access resource or access resource group, a first reference object or first reference object group, a second reference object or second reference object group, a first access resource or first access resource group, or a second access resource or second access resource group.

30. A terminal, comprising a processor and a memory, wherein the memory stores a program or instructions capable of running on the processor, and the program or instructions, when executed by the processor, implement the steps of the information configuration and processing method according to any one of claims 1 to 18.

31. A network-side device, comprising a processor and a memory, wherein the memory stores a program or instructions capable of running on the processor, and the program or instructions, when executed by the processor, implement the steps of the information configuration and processing method according to any one of claims 19 to 27.

32. A readable storage medium, wherein a program or instructions are stored on the readable storage medium, and the program or instructions, when executed by a processor, implement the information configuration and processing method according to any one of claims 1 to 18, or implement the steps of the information configuration and processing method according to any one of claims 19 to 27.
